(19) Europäisches Patentamt
European Patent Office
Office européen des brevets

(11) **EP 3 345 357 B1**

(12) **FASCICULE DE BREVET EUROPEEN**

(45) Date de publication et mention de la délivrance du brevet:
**25.03.2020 Bulletin 2020/13**

(21) Numéro de dépôt: **16759759.0**

(22) Date de dépôt: **31.08.2016**

(51) Int Cl.:
**H04L 27/26** $^{(2006.01)}$        **H04B 7/0413** $^{(2017.01)}$

(86) Numéro de dépôt international:
**PCT/EP2016/070535**

(87) Numéro de publication internationale:
**WO 2017/037128 (09.03.2017 Gazette 2017/10)**

(54) **PROCEDE ET DISPOSITIF DE SYNCHRONISATION MIMO EN PRESENCE D'INTERFERENCES**

VERFAHREN UND EINRICHTUNG ZUR MIMO-SYNCHRONIZATION IN DER ANWESENHEIT VON INTERFERENZEN

METHOD AND APPARATUS FOR MIMO SYNCHRONIZATION IN THE PRESENCE OF INTERFERENCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.09.2015 FR 1501813**

(43) Date de publication de la demande:
**11.07.2018 Bulletin 2018/28**

(73) Titulaire: **Thales**
**92400 Courbevoie (FR)**

(72) Inventeurs:
• CHEVALIER, Pascal
  **92622 Gennevilliers Cedex (FR)**
• PIPON, François
  **92622 Gennevilliers Cedex (FR)**
• HILTUNEN, Sonja
  **92622 Gennevilliers Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
• **HILTUNEN S ET AL: "New insights into time synchronization of MIMO systems with interference", 2015 23RD EUROPEAN SIGNAL PROCESSING CONFERENCE (EUSIPCO), EURASIP, 31 août 2015 (2015-08-31), pages 1381-1385, XP032836609, DOI: 10.1109/EUSIPCO.2015.7362610**

EP 3 345 357 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

**Description**

L'invention concerne un procédé et un dispositif permettant à un modem de se synchroniser, aussi bien en temps qu'en fréquence, sur un transmetteur de données numériques par voie hertzienne, en l'absence et en présence d'interférences (involontaires ou volontaires), pour un système intégrant plusieurs antennes aussi bien en émission qu'en réception, ou système MIMO (abréviation anglo-saxonne de Multiple Input Multiple Output).

Dans les systèmes de transmissions de données numériques par voie hertzienne, la synchronisation (temps/fréquence) est effectuée, à partir de séquences de symboles connues du récepteur et intercalées entre les symboles d'information, par corrélation entre le signal reçu et un signal de référence construit à partir des symboles connus. Le résultat est comparé à un seuil pour décider de la synchronisation. Les procédés permettant de synchroniser un modem sur un transmetteur de données numériques sont assez bien connus pour des systèmes de transmission simple entrée multiple sorties, SIMO. Par exemple, la publication de D.M. Duglos, R.A. Scholtz, intitulée "Acquisition of spread spectrum signals by an adaptive array," IEEE Trans. Acou. Speech.Signal Proc., vol. 37, no. 8, pp. 1253-1270, 1989, et la publication de L.E. Brennan, I.S. Reed, intitulée "An adaptive array signal processing algorithm for communications", IEEE Trans. Aerosp. Electronic Systems, vol. 18, no. 1, pp. 124-130, 1982, décrivent de tels procédés pour la synchronisation temporelle. Le brevet EP 0 665 665 du demandeur porte sur une amélioration de ces techniques.

Dans le cas des systèmes de type MIMO, les procédés connus du demandeur pour une synchronisation MIMO robuste aux interférences correspondent aux récepteurs de test de rapport de vraisemblance ou GLRT (Generalized Likelihood Ratio Test) et d'erreur quadratique moyenne minimum ou MMSE (Minimum Mean Square Error) décrits, par exemple, dans la publication de D. W. Bliss, P. A. Parker "Temporal synchronization of MIMO wireless communication in the presence of interference", IEEE Trans. Signal Process., vol. 58, no.3, pp.1794-1806, Mar. 2010. Cependant, le procédé GLRT décrit dans cette publication est complexe à mettre en œuvre, car il nécessite le calcul d'un déterminant et d'une inversion de matrice à chaque position testée, ce qui devient coûteux lorsque le nombre d'antennes du système augmente. Le procédé MMSE, moins coûteux, devient sous-optimal pour les séquences non-orthogonales. Il existe donc un besoin de disposer de récepteurs alternatifs à complexité réduite visant à conserver les performances du récepteur GLRT précité. Un tel récepteur à complexité réduite est divulgué dans HILTUNEN S ET AL: "New insights into time synchronization of MIMO systems with interference",2015 23RD EUROPEAN SIGNAL PROCESSING CONFERENCE (EUSIPCO), EURASIP, 31 août 2015 (2015-08-31), pages 1381-1385.

L'invention concerne un procédé de synchronisation temps/fréquence d'un signal dans un système de transmission comprenant M émetteurs et N récepteurs, les N récepteurs étant reliés à un processeur adapté à traiter les signaux et à transmettre un résultat à un démodulateur, en présence d'interférences caractérisé en ce qu'il comporte au moins les étapes suivantes :

Au niveau du processeur :

- Calculer une matrice de corrélation $R_{ss}$ de signaux de référence émis par les M capteurs émetteurs, calculer son inverse $R_{ss}^{-1}$,

- Pour chaque indice $I$ correspondant à un instant possible de synchronisation, avec $I$ variant jusqu'à une position $I$ + Etal, où Etal est l'étalement temporel maximal du canal, lorsque $I$ correspond à la première position testée pour laquelle il y a dépassement du seuil réitérer les étapes suivantes :

  - Estimer la matrice de corrélation de bruit $\hat{R}(I)$ reçu sur les N capteurs en réception,
  - Calculer l'inverse de la matrice de corrélation estimée, $\hat{R}^{-1}(I)$
  - Pour chaque indice $\Delta f$ correspondant à un décalage ou offset de fréquence possible pour la synchronisation fréquentielle, entre $\Delta f_{min}$ et $\Delta f_{max}$,

    ◦ Estimer une matrice d'intercorrélation entre les signaux reçus sur les N capteurs en réception, décalés de $-\Delta f$, et les séquences d'apprentissage transmises par les M antennes en émission, $\hat{R}_{XS}(I, \Delta f)$,
    ◦ Calculer un critère de synchronisation en déterminant la trace Tr[.] d'une matrice résultant du produit formé par la matrice inverse de corrélation des séquences d'apprentissage $R_{ss}^{-1}$, la transposée conjuguée de l'estimée de la matrice d'intercorrélation des signaux reçus et de la matrice des séquences d'apprentissage $\hat{R}_{XS}(I,\Delta f)^H$, l'inverse d'une estimée de la matrice de bruit $\hat{R}^{-1}(I)$ et l'estimée de la matrice d'intercorrélation entre les observations reçues et les séquences d'apprentissage $\hat{R}_{XS}(I,\Delta f)$:

$$C(I, \Delta f) = EGLRT3(I, \Delta f) = \text{Tr}[R_{SS}^{-1} \, \hat{R}_{XS}(I, \Delta f)^H \, \hat{R}^{-1}(I) \, \hat{R}_{XS}(I, \Delta f)]$$

∘ Comparer la valeur du critère C(*l*, Δ*f*) obtenu à une valeur seuil η, si la valeur du critère C(*l*, Δ*f*) dépasse la valeur seuil η, alors considérer l'indice I comme un candidat potentiel à l'instant temporel permettant la synchronisation et l'offset Δ*f* comme un candidat potentiel à l'offset de fréquence de synchronisation, réitérer le processus pour Δ*f* - δ et Δ*f* + δ, où δ est le pas d'analyse en fréquence et réitérer le processus jusqu'à la position I + Etal, où Etal est l'étalement temporel maximal du canal, déterminer une ou plusieurs valeurs d'instant possible I, et d'offset possible Δ*f* et déclencher le procédé de synchronisation et d'acquisition des signaux,

∘ Si la valeur du critère C(*l*, Δ*f*) est inférieure à la valeur seuil, incrémenter la valeur de Δ*f* de jusqu'à une éventuelle nouvelle détection.

Selon une variante de réalisation, on estime la matrice de bruit en l'assimilant à l'inverse de la matrice de corrélation des signaux reçus $\hat{R}_{xx}(l)$ et le critère de calcul conjoint de l'indice et de l'offset de synchronisation est réalisé par la formule suivante : en déterminant la trace d'une matrice résultant du produit formé par la matrice inverse de corrélation des séquences d'apprentissage, la transposée conjuguée de l'estimée de la matrice d'intercorrélation des signaux reçus et de la matrice des séquences d'apprentissage, l'inverse d'une estimée de la matrice de bruit $\hat{R}^{-1}(l)$=

$$\hat{R}_{xx}^{-1}(l)$$

et l'estimée de la matrice d'intercorrélation entre les observations reçues et les séquences d'apprentissage :

$$C(l, \Delta f) = E0\_GLRT3(l, \Delta f) = Tr[R_{SS}^{-1} \hat{R}_{XS}(l, \Delta f)^H \hat{R}_{XX}^{-1}(l) \hat{R}_{XS}(l, \Delta f)].$$

Dans le cas où les M séquences de référence émises par les M capteurs émetteurs sont orthogonales, le calcul de l'indice de synchronisation est effectué, par exemple, en utilisant la formule suivante :

$$C(l, \Delta f) = E0\_GLRT3(l, \Delta f) \triangleq \sum_{i=1}^{M} \frac{\hat{r}_{XS_i}(l, \Delta f)^H \hat{R}_X(l)^{-1} \hat{r}_{XS_i}(l, \Delta f)}{r_{si}}$$

où le vecteur $\hat{r}_{XS_i}(l, \Delta f)$ est le vecteur d'intercorrélation entre les observations offsettées de - Δ*f* et la séquence d'apprentissage émise par un émetteur i pour une position de synchronisation testée I, défini par :

$$\hat{r}_{XS_i}(l, \Delta f) \triangleq \frac{1}{K} \sum_{n=0}^{K-1} x((k+l)) \, s_i(k)^* \exp(- j2\pi\Delta f \, kT_e)$$

où $s_i(k)$ est la composante i de $s(k)$ et où $T_e$ est la période d'échantillonnage.

Selon une variante de réalisation, la matrice de bruit estimée, $\hat{R}_1(l, \Delta f)$, peut être estimée en retirant les contributions des séquences de synchronisation au niveau de l'estimée de la matrice de corrélation des signaux reçus, dans l'hypothèse où le signal contenant les séquences de référence est aligné dans le temps et en fréquence avec la matrice d'observation et le critère est obtenu par la formule suivante :

$$\hat{R}_1(l, \Delta f) = \hat{R}_{XX}(l) - \hat{R}_{XS}(l, \Delta f) R_{SS}^{-1} \hat{R}_{XS}(l, \Delta f)^H$$

$$C(l, \Delta f) = E1\_GLRT3(l, \Delta f) = Tr[R_{SS}^{-1} \hat{R}_{XS}(l, \Delta f)^H \hat{R}_1^{-1}(l, \Delta f) \hat{R}_{XS}(l, \Delta f)]$$

$$R_{ss}^{-1}$$ inverse de la matrice de corrélation des séquences de référence, $\hat{R}_{XS}(l, \Delta f)$ estimée de la matrice d'intercorrélation et sa transposée $\hat{R}_{XS}(l, \Delta f)^H$.

Les M séquences de référence sont, par exemple, des séquences orthogonales, le critère est obtenu par la formule suivante :

$$C(l, \Delta f) = E1\_GLRT3(l, \Delta f) \triangleq \sum_{i=1}^{M} \frac{\hat{r}_{XS_i}(l, \Delta f)^H \hat{R}_1^{-1}(l, \Delta f)\, \hat{r}_{XS_i}(l, \Delta f)}{r_{si}}$$

où le vecteur $\hat{r}_{XS_i}(l, \Delta f)$ est le vecteur d'intercorrélation entre les observations décalées de $-\Delta f$ et la séquence d'apprentissage émise par un émetteur i pour une position de synchronisation testée l, défini ci-dessus, où $s_i(k)$ est la composante i de $\boldsymbol{s}(k)$ et $\hat{R}_1^{-1}(l, \Delta f)$ l'inverse de l'estimée de la matrice bruit.

Selon une variante, on construit une matrice d'observation ($N \times K'$) avec K' choisi et fixé afin que la matrice de canal H et la matrice de bruit soient stationnaires sur l'horizon temporel fixé par K' et on utilise la matrice estimée

$$\hat{R}'_{xx}(l) = \frac{X'(l) X'(l)^H}{K'}$$

pour K'-K+1 positions testées avec X'(l) une matrice d'observation définie à partir des K' échantillons de signaux.

Pour des applications où les bruits sont décorrélés sur les antennes mais de puissances différentes, le critère est, par exemple, obtenu par la formule suivante :

$$C(l, \Delta f) = E0\_Diag\_GLRT3(l, \Delta f) = Tr[R_{SS}^{-1}\, \hat{R}_{XS}(l, \Delta f)^H\, \hat{R}_0'^{-1}(l)\, \hat{R}_{XS}(l, \Delta f)]$$

$R_{ss}^{-1}$ inverse de la matrice de corrélation des séquences de référence, $\hat{R}_{XS}(l, \Delta f)$ estimée de la matrice d'intercorrélation et sa transposée $\hat{R}_{XS}(l, \Delta f)^H$

$$\hat{R}_0'^{-1}(l) = Diag(\hat{\eta}10(l), \hat{\eta}20(l), \ldots , \hat{\eta}N0(l))^{-1}.$$

$$\hat{\eta}0(l) \triangleq \frac{1}{NK} \sum_{k=0}^{K-1} \boldsymbol{x}(k+l)^H \boldsymbol{x}(k+l)$$

$\eta_i$ est la puissance du bruit sur l'antenne de réception i, avec $\boldsymbol{x}(k+l)$ l'enveloppe des signaux en sortie d'antenne de réception.

Pour des applications de bruit blanc, le critère de synchronisation peut être obtenu par la formule suivante :

$$C(l, \Delta f) = E0\_BB\_GLRT3(l, \Delta f) = Tr[R_{SS}^{-1}\, \hat{R}_{XS}(l, \Delta f)^H\, \hat{R}_{XS}(l, \Delta f)] / Tr[\hat{R}_{xx}(l)] = Tr[\hat{R}_{XS}(l, \Delta f)$$

$$R_{SS}^{-1}\, \hat{R}_{XS}(l, \Delta f)^H] / Tr[\hat{R}_{xx}(l)]$$

Tr[.] est la trace d'une matrice,

$R_{ss}^{-1}$ l'inverse de la matrice de corrélation des séquences de référence,

$\hat{R}_{XS}(l, \Delta f)$ l'estimée de la matrice d'intercorrélation et sa transposée $\hat{R}_{XS}(l, \Delta f)^H$,

$\hat{R}_{xx}(l)$ l'estimée de la matrice de corrélation des signaux reçus.

Pour des applications où les M séquences de synchronisation sont décorrélées et orthogonales, on utilise, par exemple, la formule suivante :

$$GLRT1'(l, \Delta f) = \sum_{i=1}^{M} \frac{\hat{r}_{xs_i}(l, \Delta f)^H \hat{r}_{xs_i}(l, \Delta f)}{\hat{r}_x(l)\, r_{si}}$$

Selon une variante, on peut déterminer le vecteur d'intercorrélation $\hat{r}_{xs_i}(l, \Delta f)$ pour chaque position l à tester et pour chaque décalage en fréquence $\Delta f$ appartenant à l'intervalle $[-\Delta f_{max}, \Delta f_{max}]$, où $\Delta f_{max} = M_d\, \delta$ où $\delta$ est le pas de recherche de l'offset et où $2 M_d + 1$ est le nombre de cases Dopper à tester, en utilisant la formule suivante :

$$\hat{r}_{xsi}(l, \Delta f) = \left(\frac{1}{K}\right) \sum_{k=0}^{K-1} x(l + F_{sur} * k) s_i^*(k) e^{-2j\pi\frac{\Delta f}{F_s}.k.F_{sur}}$$

avec $F_{sur}$ le facteur de sur-échantillonnage du signal d'entrée par rapport à la fréquence symbole Fs, où $\Delta f_{max}$ est donnée en fonction de la vitesse maximum de déplacement des émetteurs et récepteurs.

Selon une variante de réalisation, on découpe la longueur K d'une séquence d'apprentissage en T tranches de longueur $K_0$ avec K=T* $K_0$, T étant choisi afin que la rotation de phase induite par le décalage de fréquence est négligeable, on estime pour chaque position de synchronisation testée *l*, un vecteur d'intercorrélation sur chaque tranche *t* et pour chaque case Doppler *m* (m = -$M_d$, ..., +$M_d$), au pas $\Delta f'$ :

$$\hat{r}_{xsi}(l, m) = \left(\frac{1}{K}\right) \sum_{t=0}^{T-1} \hat{r}_{xsi,t}(l) e^{-2j\pi\frac{m.\Delta f'}{F_s}.t.K_0}$$

et en déterminant la matrice de corrélation par la formule suivante :

$$\hat{R}_{xx}(l) = \left(\frac{1}{K}\right) \sum_{k=0}^{K-1} x(l + Fsur * k)\, x^H(l + Fsur * k)$$

$F_{sur}$ est la fréquence de suréchantillonnage, $F_s$ la fréquence symbole,

On peut estimer le décalage Doppler associé à un trajet détecté sur une position de synchronisation par interpolation parabolique à partir de critères calculés sur la position $l_0$ pour les trois cases Doppler ($m_0$-1), $m_0$ et ($m_0$+1) :

$$\widehat{\Delta f} = \left(m_0 + \frac{1}{2} \frac{c(l_0, m_0+1) - c(l_0, m_0-1)}{c(l_0, m_0-1) + c(l_0, m_0+1) - 2.c(l_0, m_0)}\right).\Delta f'.$$

On peut utiliser des transformées de Fourier ou des transformées de Fourier rapide pour calculer les intercorrélations effectuées sur chaque séquence d'apprentissage :

$$\hat{r}_{xsi}(l, m) = \left(\frac{1}{K}\right) \sum_{t=0}^{T-1} \hat{r}_{xsi,t}(l) e^{-2j\pi\frac{t.m}{T}}$$

Pour un signal contenant une trame de données comprenant des séquences de synchronisation TS, on utilise, par exemple, ces séquences TS et on exécute les étapes suivantes :

Le pas $\Delta f$ dépend des positions des deux séquences TS extrêmes de la trame de données :

$$\Delta f' = \frac{DELTA\_PHI\_MAX}{2.\pi.\left(p_{N_{TS}-1} + (I-1)K_0 - p_0\right)} .F_s$$

Pour chaque position de synchronisation testée *l*, un vecteur d'intercorrélation est estimé sur chaque tranche *t* de chaque séquence d'apprentissage j par la formule suivante :

$$\hat{r}_{xsi,t,j}(l) = \sum_{k=0}^{K_0-1} x\left(l + F_{sur} * (k + p_j + t.K_0)\right) s_{i,j}^*(k + t.K_0)$$

$$\hat{r}_{xsi}(l, m) = \left(\frac{1}{KN_{TS}}\right) \sum_{j=0}^{N_{TS}-1} \left(\sum_{t=0}^{T-1} \hat{r}_{xsi,t,j}(l) e^{-2j\pi\frac{m.\Delta f'}{F_s}.t.K_0}\right) e^{-2j\pi\frac{m.\Delta f'}{F_s}(p_j - p_0)}$$

en calculant les matrices de corrélation sur les $N_{TS}$ séquences d'apprentissage par la formule suivante :

$$\widehat{R}_{xx}(n) = \left(\frac{1}{KN_{TS}}\right) \sum_{j=0}^{N_{TS}-1} \left( \sum_{k=0}^{K-1} x\left(n + Fsur * (k + p_j)\right) x^H\left(n + Fsur * (k + p_j)\right)\right)$$

- $N_{TS}$, le nombre de séquences d'apprentissage sur lesquelles est effectué le calcul du critère de synchronisation,
- $s_{i,j}(k)$, la séquence d'apprentissage d'indice $j$ ($j=0, ... , N_{TS}$ -1) émise sur l'antenne d'émission $i$,
- $p_j$, l'indice du premier symbole de la séquence d'apprentissage $j$, commun à toutes les antennes d'émission.

D'autres caractéristiques et avantages de la présente invention apparaitront dans la description qui suit faite au regard des figures des dessins annexés qui représentent :

• La figure 1, un schéma fonctionnel d'un système de transmission de données comprenant plusieurs émetteurs et un dispositif de réception comportant au moins une antenne selon l'invention,
• La figure 2, un organigramme retraçant un exemple d'étapes du procédé selon l'invention, et
• La figure 3, schématise un exemple de trame au niveau d'une antenne d'émission.

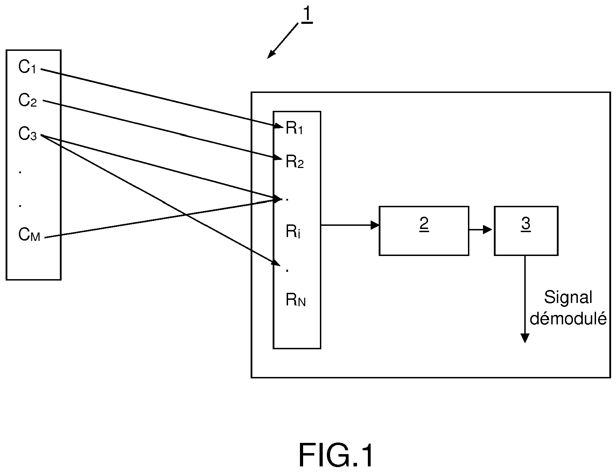

La figure 1 représente un exemple de transmission de données dans un système 1 comprenant M capteurs émetteurs $C_1$,.., $C_M$, des antennes bande étroite par exemple, et N capteurs récepteurs $R_1$,.., $R_N$, par exemple des antennes bande étroite. Les séquences de données transmises sont reçues par les N récepteurs dans un environnement comportant du bruit avec des interférences. Les capteurs récepteurs sont en liaison avec un processeur 2 qui va être adapté à exécuter les étapes du procédé selon l'invention afin de déterminer l'instant de synchronisation permettant l'acquisition des signaux à partir du calcul d'un critère qui va être décrit ci-après. Le processeur peut ensuite transmettre les instants et les offsets de synchronisation ainsi obtenus à un démodulateur 3 permettant la démodulation des symboles utiles transmis. Le démodulateur 3 comporte notamment un module de décision adapté à caler l'égaliseur en fonction des observations et des instants trouvés pour la synchronisation selon un principe connu de l'homme du métier. L'étape de synchronisation est un prérequis à cette démodulation. Elle permet non seulement de détecter la présence du signal utile sur les antennes de réception mais elle permet aussi de connaître les positions des symboles de référence et celles des symboles à démoduler. Enfin, elle permet aussi de caler judicieusement les égaliseurs à mettre en œuvre avant la démodulation pour un maximum de performances. L'étape de démodulation sera réalisée en utilisant des techniques connues de l'homme du métier et ne sera pas détaillée. Le résultat de la mise en œuvre du procédé selon l'invention correspond à une optimisation de la détection d'un signal.
Soit un lien MIMO (MxN) avec M antennes à bande étroite à l'émission et N antennes à bande étroite à la réception, et $s(k)$ ($0 \le k \le K-1$) le vecteur (M×1), de longueur K, des séquences d'apprentissage émises simultanément sur les antennes d'émission à l'instant k. En supposant un canal de propagation à fading plat et lorsque la synchronisation temporelle et fréquentielle sont parfaites, les enveloppes complexes des signaux à la sortie des N antennes de réception, pour un instant optimal de synchronisation $l_0$ et pour un offset optimal de fréquence $\Delta f_0$ peuvent être écrites comme la somme des contributions des signaux utiles et du bruit total échantillonné :

$$x_0(k+l_0) = x(k+l_0) \exp(-j2\pi\Delta f_0(k+l_0)T_e) = Hs(k)+v(k+l_0) \qquad (1)$$

Dans cette expression, $T_e$ est la période d'échantillonnage, $x(k+l_0)$ correspond au vecteur formé par les signaux reçus sur les capteurs de réception à l'instant $k+l_0$, $x_0(k+l_0)$ est le vecteur à l'instant $k+l_0$ des observations offsettées de - $\Delta f_0$, H est la matrice (N×M) de canal et $v(k+l_0)$ le vecteur de bruit total offsetté de - $\Delta f_0$ et échantillonné à l'instant $k+l_0$, qui contient la contribution potentielle des interférences multi utilisateurs ou MUI, des brouilleurs et du bruit de fond. En désignant par $X_l=[x_0(l),.., x_0(l+K-1)]$ et $V_l=[v(l),.., v(l+K-1)]$ les matrices (N×K) des observations décalées ou offsettées de manière optimale et du bruit total pour la position de synchronisation testée l, et $S=[s(0),.., s(K-1)]$ la matrice (M×K) des séquences d'apprentissage, la matrice des observations $X_{l0}$ pour la position optimale d'échantillonnage s'écrit

$$X_{l0} = HS + V_{l0}. \qquad (2)$$

La matrice d'observation $X_{l0}$ correspond aux signaux reçus sur les capteurs récepteurs offsettés optimalement pour les instants $k+l_0$ ($0 \leq k \leq K-1$). La suite des justifications théoriques, traite du cas où l'offset de fréquence n'existe pas puisque dans le modèle (2) il a été compensé et le cas où il est pris en compte.

Le problème de la synchronisation temporelle d'une liaison MIMO peut être considéré comme un problème de détection à deux hypothèses. La première hypothèse $H_1$ obtenue pour l'instant de synchronisation optimal $l=l_0$ est que la matrice des séquences d'apprentissage S est parfaitement alignée dans le temps avec la matrice d'observation $X_l$ correspondant au modèle (2). La deuxième hypothèse $H_0$ est qu'il n'y a pas de signal dans la matrice d'observation $X_l$. Les deux hypothèses, pour la position I de synchronisation testée, sont donc:

$$H_0 : X_l = V_l$$

$$H_1 : X_l = HS + V_l \qquad (3)$$

Pour chaque position temporelle I testée, la synchronisation consiste alors à élaborer un critère de synchronisation qui est fonction des observations $X_l$ et à comparer la valeur de ce critère à une valeur seuil $\eta$. Si le seuil est dépassé pour un indice de synchronisation possible I, alors l'indice est décidé comme candidat susceptible d'être le bon instant ou moment de synchronisation. Les performances d'un critère de synchronisation sont caractérisées par la probabilité d'une détection correcte $P_D$ sous l'hypothèse $H_1$ pour une probabilité de fausse alarme $P_{FA}$ donnée (en cas d'absence de signal), correspondant à la probabilité de dépasser le seuil sous l'hypothèse $H_0$.

Avant d'exposer les étapes du procédé de synchronisation selon l'invention, quelques rappels sur l'obtention du recepteur (comment on détermine le critère pour définir l'instant de synchronisation) permettant la synchronisation selon l'art antérieur sont donnés.

Selon la théorie optimale au sens de Neyman-Pearson, la statistique optimale pour la détection de la matrice S à partir de la matrice d'observation X (on a ôté ici l'indice I de position testée pour simplifier les notations) est le test du rapport de vraisemblance LRT (Likelihood Ratio Test) qui consiste à comparer la fonction

$\mathrm{LRT} \triangleq p_{H_1}(\mathbf{X}|\mathbf{S}, \mathbf{H}, \mathbf{R}) / p_{H_0}(\mathbf{X}|\mathbf{R})$ à un seuil, où $p_{Hi}(X| ..)(i=0,1)$ est la densité de probabilité conditionnelle de X sous Hi. Pour calculer cette statistique de test, on suppose que les échantillons de bruit v(k) sont gaussiens de moyenne nulle, stationnaires, blancs temporellement, circulaires avec une matrice de corrélation $R = E[v(k)v(k)^H]$, où 'H' signifie le transposé conjugué. L'expression du LRT prend alors la forme suivante :

$$LRT = \frac{\Pi_{k=0}^{K-1} p_{H_1}\left(v(k)|s(k), H, R\right)}{\Pi_{k=0}^{K-1} p_{H_0}\left(v(k)|R\right)} \qquad (4)$$

Pour le modèle on obtient :

$$p_{H_0}\left(v(k)|R\right) = \frac{1}{\pi^N \det(R)} e^{-x(k)^H R^{-1} x(k)}$$

$$p_{H_1}\left(v(k)|s(k), H, R\right) = \frac{1}{\pi^N \det(R)} e^{-(x(k)-Hs(k))^H R^{-1}(x(k)-Hs(k))} \qquad (5, 6)$$

où det(R) signifie le déterminant de la matrice R. Les valeurs de R et de H étant inconnues, on utilise leur estimée au sens du maximum de vraisemblance, EMV, sous chacune des hypothèses $H_1$ et $H_0$. Ceci conduit à la statistique GLRT2 connue de l'art antérieur précité, avec :

$$GLRT 2 = \det\left[I_k - \hat{P}_s \hat{P}_x\right]^{-K} \qquad (7)$$

où $I_k$ est la matrice identité de dimension K, $\hat{P}_s$ et $\hat{P}_x$ sont des matrices ($K \times K$) correspondant aux projecteurs sur les espaces engendrés par les lignes de S et de X respectivement ; définies par $\hat{\mathbf{P}}_s \triangleq \mathbf{S}^H(\mathbf{S}\mathbf{S}^H)^{-1}\mathbf{S}$ et $\hat{\mathbf{P}}_x \triangleq \mathbf{X}^H(\mathbf{X}\mathbf{X}^H)^{-1}\mathbf{X}.$

En définissant les matrices $\mathbf{R}_{ss} \triangleq \mathbf{S}\mathbf{S}^H/K,\ \hat{\mathbf{R}}_{xx} \triangleq \mathbf{X}\mathbf{X}^H/K$ et $\hat{\mathbf{R}}_{xs} \triangleq \mathbf{X}\mathbf{S}^H/K$ et en utilisant les propriétés du déterminant, il est facile de montrer que la formule (7) s'écrit aussi :

$$GLRT2 = \det\left[I_N - \hat{R}_{xx}^{-1}\hat{R}_{xs}R_{ss}^{-1}\hat{R}_{xs}^H\right]^{-K}$$
$$= \det\left[I_M - R_{ss}^{-1}\hat{R}_{xs}^H\hat{R}_{xx}^{-1}\hat{R}_{xs}\right]^{-K} \tag{8}$$

L'expression suppose un nombre M d'antennes en émission inférieur ou égal à K.

Les deux formules (7) et (8) montrent que, pour chaque position de synchronisation *l* testée, (X = X*l*), le récepteur connu de l'art antérieur nécessite le calcul d'au moins une inversion de matrice (N×N), $\hat{R}_{xx}^{-1}$ et celui du déterminant d'une matrice (P×P), où P=Inf(K,N,M) ce qui peut être prohibitif lorsque K est grand et que le système comprend un grand nombre d'antennes.

On voit que le calcul du déterminant est d'autant plus coûteux que les nombres d'antennes d'émission et de réception sont importants. L'idée de la présente invention est donc d'offrir des récepteurs à complexité réduite ayant des performances semblables au moins à celles de l'art antérieur, voire supérieures.

Une première variante de mise en œuvre du procédé est basé sur le récepteur GLRT sous l'hypothèse que la matrice de canal H est inconnue en présence d'un bruit total de moyenne nulle, stationnaire, circulaire, Gaussien dont la matrice de covariance R est supposée connue. Ce récepteur GLRT est appelé GLRT3 dans la suite.

L'estimée de la matrice canal H sous l'hypothèse $H_1$ est donnée par:

$$\hat{H} = \hat{R}_{xs}R_{ss}^{-1} \tag{9}$$

où $\hat{R}_{xs}$ correspond à l'estimée de la matrice d'intercorrélation des signaux reçus et des signaux de référence, et $R_{ss}^{-1}$ correspond à l'inverse de la matrice de corrélation des signaux de référence.

R étant la matrice de bruit supposée connue, une statistique suffisante est obtenue à partir de (4) en remplaçant H par son estimée (9). En utilisant les formules (5) et (6) et en prenant le logarithme de (4), on obtient une statistique suffisante ou un nouveau critère de calcul de l'instant de synchronisation :

$$GLRT3 = Tr\left[R_{ss}^{-1}\hat{R}_{xs}^H R^{-1}\hat{R}_{xs}\right] \tag{10}$$

avec :

$R_{ss}^{-1}$ l'inverse de la matrice de corrélation des signaux de référence,

$\hat{R}_{xs}^H$ la transposée conjuguée de l'estimée de la matrice d'intercorrélation des signaux reçus et des signaux de référence,

$R^{-1}$ l'inverse de la matrice bruit, supposée stationnaire,

$\hat{R}_{xs}$ l'estimée de la matrice d'intercorrélation des signaux reçus et des signaux de référence.

En faisant apparaître l'instant l, la formule (10) s'écrit :

$$C(l) = GLRT3(l) = Tr\left[R_{ss}^{-1}\hat{R}_{xs}^{H}(l)R^{-1}\hat{R}_{xs}(l)\right] \quad \text{(10bis)}$$

avec :

$\hat{R}_{xs}^{H}(l)$ la transposée conjuguée de l'estimée de la matrice d'intercorrélation des signaux reçus et des signaux de référence, pour un instant I possible pour la synchronisation,

$\hat{R}_{xs}(l)$ l'estimée de la matrice d'intercorrélation des signaux reçus et des signaux de référence pour un instant I possible de synchronisation,

$R^{-1}$ l'inverse de la matrice bruit.

Cette méthode présente notamment l'avantage de ne pas faire appel au calcul de déterminant, de diminuer la complexité du récepteur.

Toutefois, en pratique, la matrice R est inconnue et doit être estimée à chaque position de synchronisation testée *l* par une matrice de bruit estimée $\hat{R}(l)$. En remplaçant R par son estimée $\hat{R}(l)$ dans la formule (10bis), on obtient un récepteur optimisé permettant de déterminer l'instant de synchronisation des signaux, le critère pour déterminer un instant de synchronisation I s'écrivant de la manière suivante :

$$C(l) = EGLRT3(l) = Tr\left[R_{ss}^{-1}\hat{R}_{xs}^{H}(l)\hat{R}^{-1}(l)\hat{R}_{xs}(l)\right] \quad \text{(10ter)}$$

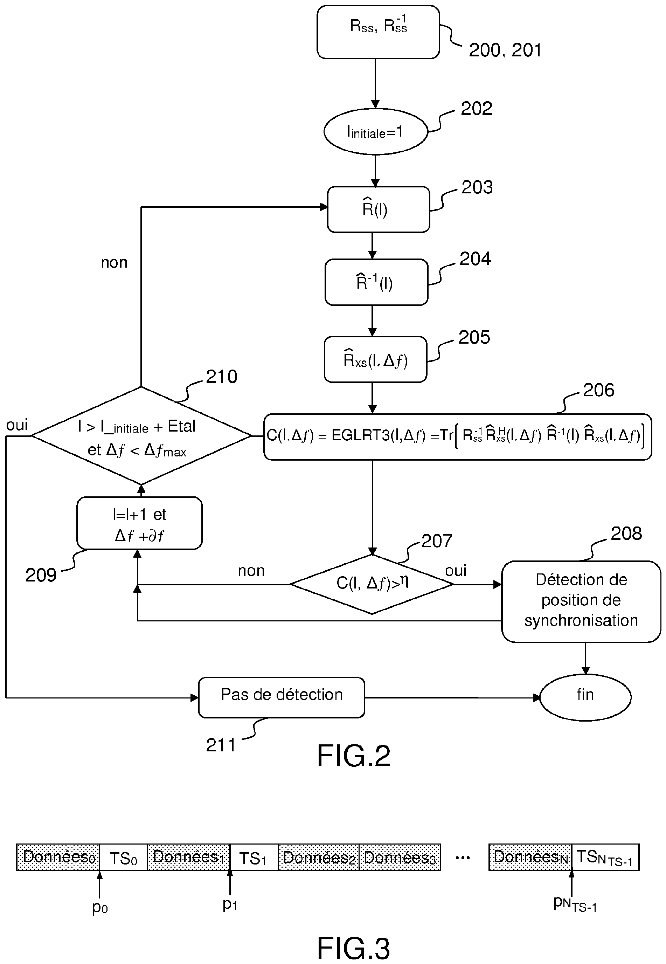

La figure 2 schématise les différentes étapes du procédé mis en œuvre par l'invention tenant compte du décalage en fréquence. En amont, on a déterminé la valeur de la matrice de corrélation des séquences de référence et son inverse, 200, 201, $R_{ss}$ et $R_{ss}^{-1}$,

- On initialise I à une valeur initiale $I_{initiale} = 1$, par exemple, 202

Pour un instant possible de synchronisation I,

- On détermine, 203, la valeur estimée de la matrice de corrélation $\hat{R}(l)$ du bruit estimé, puis on va calculer 204, l'inverse de cette matrice $\hat{R}^{-1}(l)$, on calcule 205 l'estimée $\hat{R}_{xs}(l)$ de la matrice d'intercorrélation entre les signaux reçus sur les N capteurs en réception « offsettés » de $-\Delta f$ et des signaux de référence et les séquences d'apprentissage transmises par les M antennes en émission $\hat{R}_{xs}(l,\Delta f)$, on effectue ce calcul pour chaque indice $\Delta f$ correspondant à un décalage de fréquence possible pour la synchronisation fréquentielle entre les valeurs $\Delta f_{min}$ et $\Delta f_{max}$,
- On détermine le critère de synchronisation $C(l, \Delta f)$ en déterminant la matrice résultant du produit formé par la matrice inverse de corrélation des séquences d'apprentissage , la transposée conjointe de l'estimée de la matrice d'intercorrélation des signaux reçus et de la matrice des séquences d'apprentissage $\hat{R}_{xs}(l, \Delta f)^{H}$, l'inverse de la matrice d'intercorrélation entre les observations reçues et les séquences d'apprentissage $\hat{R}_{xs}(l, \Delta f)$, par exemple, 206, $C(l, \Delta f)$ = EGLRT3($l, \Delta f$) = Tr[$R_{ss}^{-1}\hat{R}_{xs}(l, \Delta f)^{H}\hat{R}^{-1}(l)\hat{R}_{xs}(l, \Delta f)$], d'autres exemples de calcul pour le critère *C(l)* seront donnés dans la description, puis
- On va comparer la valeur du critère trouvé C($l, \Delta f$) à une valeur seuil η, 207,
- Si la valeur du critère C($l, \Delta f$) est supérieure à la valeur seuil η, on utilise l'indice I trouvé comme candidat à l'instant de synchronisation l'offset $\Delta f$ comme un candidat potentiel à l'offset de fréquence de synchronisation, 208, si on détecte sur une première position initiale $I_{initiale}$, on obtient une première position candidate à la bonne synchronisation, le procédé va itérer le processus pour $\Delta f - \delta$ et $\Delta f + \delta$, où $\delta$ est le pas d'analyse en fréquence et jusqu'à la position $I_{initiale}$+Etal et informer l'organe qui décide de la synchronisation de tous les dépassements de seuil entre $I_{initiale}$ et $I_{initiale}$+Etal, l'organe de décision recense l'ensemble des valeurs I et des valeurs d'offset possibles $\Delta f$ pour lesquelles il y a dépassement du seuil, s'il existe une seule valeur de I, alors l'instant de synchronisation correspond à cette position I, s'il y a plusieurs valeurs de I, alors l'organe de décision en déduit que le canal de transmission est à trajets multiples avec un nombre de trajets séparés égal au nombre de valeurs I de dépassement trouvées et avec un étalement de canal effectif égal à l'écart entre les positions Imin et Imax de dépassement ; l'organe de décision utilise alors cette information pour caler l'égaliseur selon une méthode connue de l'homme du métier,
- Si la valeur du critère *C(l)* est inférieure au seuil, on va itérer sur I, I=I+1, et incrémenter la valeur de $\Delta f$ jusqu'à la valeur maximale, 209, jusqu'à une éventuelle détection et si on détecte, on réitère les étapes décrites précédemment lorsque le critère C(l) dépasse le seuil. Pour connaître la valeur de la matrice de bruit R, une variante possible de réalisation est d'utiliser comme matrice $\hat{R}(l)$ la valeur estimée de la matrice de bruit R sous l'hypothèse $H_0$, $\hat{R}_0$, pour une valeur l, notée $\hat{R}_0 (l)$.

L'estimée de la matrice de bruit dans le cas où il n'y a pas de signal dans la matrice d'observation est égale à l'estimée de la matrice de corrélation des signaux reçus $\hat{R}_0(l) = \hat{R}_{xx}(l) = \hat{R}(l)$, ce qui conduit à un récepteur critère permettant de déterminer l'instant de synchronisation défini par :

$$C(l) = E0 - GLRT3(l) = Tr\left[R_{ss}^{-1}\hat{R}_{xs}^{H}(l)\hat{R}_{xx}^{-1}(l)\hat{R}_{xs}(l)\right] \qquad (11),$$

ou

$$C(l) = E0 - GLRT3(l,\Delta f) = Tr\left[R_{ss}^{-1}\hat{R}_{xs}^{H}(l,\Delta f)\hat{R}_{xx}^{-1}(l)\hat{R}_{xs}(l,\Delta f)\right]$$

lorsque l'on tient compte du décalage en fréquence.

Pour des séquences orthogonales, le récepteur peut aussi s'écrire de la manière suivante :

$$C(l) = E0 - GLRT3(l) = \sum_{i=1}^{M} \frac{\hat{r}_{xsi}^{H}(l)\hat{R}_{xx}^{-1}(l)\hat{r}_{xsi}(l)}{r_{si}} \qquad (12)$$

Ou en tenant compte du décalage en fréquence

$$C(l, \Delta f) = E0 - GLRT3(l,\Delta f) \triangleq \sum_{i=1}^{M} \frac{\hat{r}_{xsi}^{H}(l,\Delta f)\hat{R}_{xx}^{-1}(l)\hat{r}_{xsi}(l,\Delta f)}{r_{si}}$$

Dans (12), le vecteur $\hat{r}_{xsi}(l)$ est le vecteur d'intercorrélation entre les observations et la séquence d'apprentissage émise par l'antenne d'émission i pour la position de synchronisation testée l, défini par

$$\hat{r}_{xs_i}(l) \triangleq \frac{1}{K}\sum_{k=0}^{K-1} x((k+l))\, s_i(k)^{*} \qquad (13)$$

où $s_i(k)$ est la composante i de $s(k)$ ($s_i(k)$ correspond donc à la séquence d'apprentissage émise sur l'antenne i et où * signifie complexe conjugué, et en tenant compte du décalage en fréquence, avec le vecteur $\hat{r}_{xsi}(l, \Delta f)$ correspondant au vecteur d'intercorrélation entre les observations offsettées de $-\Delta f$ et la séquence d'apprentissage émise par un émetteur i pour une position de synchronisation testée l, défini par :

$$\hat{r}_{xs_i}(l, \Delta f) \triangleq \frac{1}{K}\sum_{n=0}^{K-1} x((k+l))\, s_i(k)^{*} \exp(-j2\pi\Delta f\, kT_e)$$

où $s_i(k)$ est la composante i de $s(k)$.

Selon une variante de réalisation, on estimera la valeur de la matrice bruit R sous une hypothèse $H_1$ considérant que la matrice de signal est alignée dans le temps avec la matrice d'observation.

La valeur $\hat{R}_1(l)$ estimée de la matrice R sous l'hypothèse $H_1$ pour la position l testée sous une hypothèse $H_1$

est définie par $\hat{R}_1(l) = \hat{R}_{xx}(l) - \hat{R}_{xs}(l)\hat{R}_{ss}^{-1}\hat{R}_{xs}^{H}(l) = \hat{R}(l)$. Dans cette valeur estimée $\hat{R}_1(l)$, les contributions

des séquences de synchronisation ont été retirées de $\hat{R}_{xx}(l)$.

Le critère de synchronisation pour un instant I sera donc calculé à partir de la formule suivante :

$$C(l) = E1 - GLRT3(l) = Tr\left[R_{ss}^{-1}\hat{R}_{xs}^{H}(l)\hat{R}_{1}^{-1}(l)\hat{R}_{xs}(l)\right] \qquad (14)$$

Dans le cas où les M séquences de synchronisation sont orthogonales, le critère deviendra :

$$C(l) = E1 - GLRT3(l) = \sum_{i=1}^{M}\frac{\hat{r}_{xsi}^{H}(l)\hat{R}_{1}^{-1}(l)\hat{r}_{xsi}(l)}{r_{si}} \qquad (15)$$

Dans l'hypothèse où le signal est aligné dans le temps et en fréquence, les formules deviennent :

$$\hat{R}_1(l, \Delta f) = \hat{R}_{XX}(l) - \hat{R}_{XS}(l, \Delta f)\, R_{SS}^{-1}\, \hat{R}_{XS}(l, \Delta f)^{H}$$

$$C(l, \Delta f) = E1\_GLRT3(l, \Delta f) = Tr[R_{SS}^{-1}\, \hat{R}_{XS}(l, \Delta f)^{H}\, \hat{R}_1^{-1}(l, \Delta f)\, \hat{R}_{XS}(l, \Delta f)]$$

$R_{ss}^{-1}$ inverse de la matrice de corrélation des séquences de référence, et $\hat{R}_{XS}(l, \Delta f)$ estimée de la matrice d'intercorrélation et sa transposée $\hat{R}_{XS}(l, \Delta f)^{H}$.

Dans l'exemple de mise en œuvre exposé par (11), l'utilisation du critère pour déterminer la synchronisation nécessite à la fois le calcul de la matrice (N×N) $\hat{R}_{xx}(l)$ sur K échantillons d'observation et l'inversion de cette même matrice (N×N). Dans le cas où le nombre N de capteurs de réception est élevé, la complexité résultante peut devenir prohibitive.

Un moyen de diminuer la complexité de calcul est de diminuer la fréquence à laquelle on calcule la valeur de la matrice $\hat{R}_{xx}(l)$ pour un instant I et celle de son inverse $\hat{R}_{xx}^{-1}(l)$, par exemple par un facteur β>1. L'idée est d'estimer la matrice de corrélation des observations sur un horizon temporel plus grand que celui des séquences d'apprentissage, c'est-à-dire sur K' échantillons au lieu de K avec K'> K et d'utiliser cette matrice pour les β=K'-K+1 positions testées contenues dans l'horizon de cette matrice. La valeur de K' est limitée par le fait que les matrices H et R doivent rester stationnaires sur cet horizon.

Le principe de cette variante de réalisation pour la position I testée va consister à construire une matrice d'observation (N×K') définie par X'(l) = [x(l),...x(K'+l-1], construite à partir de K' échantillons qui sont choisis tels que K'>K et utilisable pour β=K'-K+1 échantillons testés.

La matrice estimée $\hat{R}_{xx}(l)$ est alors remplacée dans la formule (12) par la matrice estimée $\hat{R}'_{xx}(l)$ définie par

$$\hat{R}'_{xx}(l) = \frac{X'(l)X'(l)^{H}}{K'}$$

pour les β positions testées. Les derniers K'-K échantillons testés sont des échantillons de données au lieu des séquences de synchronisation. Comme les échantillons de données associés aux différentes antennes de réception ne sont pas corrélés, cette variante de réalisation ne pourra être utilisée que dans le cas de séquences orthogonales.

Dans certaines conditions de fonctionnement, le bruit $v(k)(0 \le k \le K-1)$ peut être supposé de moyenne nulle, stationnaire, circulaire, gaussien mais de matrice de corrélation R diagonale telle R = Diag($\eta_1, \eta_2,,,,, \eta_N$), où $\eta_i$ est la puissance du bruit sur l'antenne de réception i, supposée inconnue au même titre que la matrice canal H. Pour connaître dans ce cas la valeur de la matrice de bruit R, une variante possible de réalisation est d'utiliser la valeur estimée, au sens EMV, des puissances $\eta_i$ sous l'hypothèse $H_0$, $\hat{\eta}_{i0}$. Cette estimée s'écrit, pour la position testée I :

$$\hat{\eta}_{i0}(l) \triangleq \frac{1}{K} \sum_{k=0}^{K-1} x_i(k+l)\, x_i(k+l)^* \qquad (16)$$

Dès lors, une matrice estimée de R pour la position testée *l* est obtenue par $\hat{R'}_0(l) = \mathrm{Diag}(\hat{\eta}_{10(l)}, \hat{\eta}_{20(l)}, \ldots, \eta_{N0(l)})$. En insérant cette estimée dans (10bis), on obtient le critère de synchronisation suivant :

$$C(l) = E0-Diag-GLRT3(l) = Tr\left[ R_{ss}^{-1}\hat{R}_{xs}^{H}(l)\hat{R}_0'^{-1}(l)\hat{R}_{xs}(l) \right] \qquad (17)$$

et en tenant compte du paramètre « offset en fréquence », le critère s'écrit

$$C(l,\Delta f) = E0-Diag-GLRT3(l,\Delta f) = Tr\left[ R_{ss}^{-1}\hat{R}_{xs}^{H}(l,\Delta f)\hat{R}_0'^{-1}(l)\hat{R}_{xs}(l,\Delta f) \right].$$

Dans d'autres conditions de fonctionnement, le bruit $v(k)(0 \leq k \leq K-1)$ peut être supposé de moyenne nulle, stationnaire, circulaire, gaussien et temporellement blanc, de matrice de corrélation R proportionnelle à l'Identité et telle que $R = \eta \mathbf{I}$. Dans ce cas, les puissances $\eta_i$ sont les mêmes et égales à $\eta$, inconnues au même titre que la matrice canal H. Pour connaître dans ce cas la valeur de la matrice de bruit R, une variante possible de réalisation est d'utiliser la valeur estimée, au sens EMV, de la puissance $\eta$ sous l'hypothèse $H_0$, $\hat{\eta}_0$. Cette estimée s'écrit, pour la position testée I

$$\hat{\eta}_0(l) \triangleq \frac{1}{NK} \sum_{k=0}^{K-1} x(k+l)^{H} x(k+l) = \frac{1}{N} Tr(\hat{R}_{xx}(l)) \qquad (18)$$

Dès lors, une matrice estimée de R pour la position testée I est obtenue par $\hat{R0''}(l) = \hat{\eta}_{0(l)} \mathbf{I}$. En insérant cette estimée dans (10bis), on obtient le critère de synchronisation $C(l)$ suivant :

$$E0-BB-GLRT3(l) = \frac{Tr\left[ R_{ss}^{-1}\hat{R}_{xs}^{H}(l)\hat{R}_{xs}(l) \right]}{Tr\left[ \hat{R}_{xx}(l) \right]} = \frac{Tr\left[ \hat{R}_{xs}(l)R_{ss}^{-1}\hat{R}_{xs}^{H}(l) \right]}{Tr\left[ \hat{R}_{xx}(l) \right]} = GLRT1 \qquad (19)$$

Ce qui correspond au récepteur GLRT1, c'est-à-dire au récepteur (4) sous l'hypothèse d'un bruit inconnu, centré, circulaire, Gaussien, stationnaire et blanc temporellement et spatialement et d'une matrice canal H inconnue. Pour des applications de type bruit blanc tenant compte de l'offset en fréquence, le critère devient

$$C(l,\Delta f) =$$

$$E0-BB-GLRT3(l,\Delta f) = \frac{Tr\left[ R_{ss}^{-1}\hat{R}_{xs}^{H}(l,\Delta f)\hat{R}_{xs}(l,\Delta f) \right]}{Tr\left[ \hat{R}_{xx}(l) \right]} = \frac{Tr\left[ \hat{R}_{xs}(l,\Delta f)R_{ss}^{-1}\hat{R}_{xs}^{H}(l,\Delta f) \right]}{Tr\left[ \hat{R}_{xx}(l) \right]} = GLRT1$$

Tr[] est la trace d'une matrice,

$R_{ss}^{-1}$ l'inverse de la matrice de corrélation des séquences de référence,

$\hat{R}_{xs}(l,\Delta f)$ l'estimée de la matrice d'intercorrélation et sa transposée $\hat{R}_{xs}(l,\Delta f)^{H}$,

$\hat{R}_{xx}(l)$ l'estimée de la matrice de corrélation des signaux reçus.

Pour des applications où les M séquences de synchronisation sont décorrélées et orthogonales, l'expression (19) se transforme en :

$$C(l) = GLRT1'(l, \Delta f) = \sum_{i=1}^{M} \frac{\hat{r}_{xsi}^{H}(l)\hat{r}_{xsi}(l, \Delta f)}{\hat{r}_x(l)r_{si}} \qquad (20)$$

où

$$\hat{r}_x(l) = Tr\left[\hat{R}_{xx}(l)\right].$$

Dans la réalité, le signal reçu au point de réception est souvent affecté d'un décalage en fréquence, noté $\Delta f_O$, qui est dû à l'imprécision de la synthèse de fréquence des oscillateurs locaux OLs de l'émetteur et du récepteur ainsi qu'à la vitesse des émetteurs et des récepteurs mobiles à l'émission et à la réception (effet Doppler). On suppose dans ce brevet que les mélanges à l'émission et à la réception sont effectués avec des oscillateurs locaux OLs synchrones, c'est-à-dire que tous les signaux à l'émission sont émis avec le même décalage en fréquence $\Delta f_{o1}$ et que tous les signaux reçus sont reçus avec le même décalage en fréquence $\Delta f_{o2}$, avec $\Delta f_O = \Delta f_{o1} + \Delta f_{o2}$.

En présence d'un décalage en fréquence $\Delta f_O$, le signal reçu sur la position de synchronisation optimale $l_0$, échantillonné au rythme symbole, s'écrit :

$$\mathbf{x}(k+l_0) = H\mathbf{s}(k)\,e^{j2\pi\Delta f_0(k+l_0)/F_s} + \mathbf{v}(k+l_0) \qquad (21)$$

où $F_s$ est la fréquence symbole

Les différents critères décrits dans la présente invention sont basés sur les estimations :

- des puissances, $\hat{r}_{s_i}$, des séquences d'apprentissage,
- des matrices de corrélations $\hat{R}_x$, $\hat{R}(l)$ ou $\hat{R}_{xx}(l)$,
- des vecteurs d'intercorrélation $\hat{r}_{xS_i}$ où $i$ correspond à l'indice de l'antenne d'émission, ou $\hat{r}_{xsi}(l)$.

Par définition, $\hat{r}_{s_i}$ n'est pas affecté par un décalage en fréquence. De même, la matrice de corrélation $\hat{R}_{xx}(l)$ n'est pas affectée par un décalage en fréquence. Sa valeur asymptotique vaut, pour la position optimale de synchronisation :

$$R_{XX} = H\,R_{SS}\,H^H + R \qquad (22)$$

Par contre, le vecteur d'intercorrélation entre le signal reçu et la séquence de référence $s_i(k)$ est affecté par le décalage en fréquence. En effet, on obtient sur la position de synchronisation $l_0$:

$$\hat{r}_{xS_i}(l_0, \Delta f_0) \triangleq \frac{1}{K}\left(\sum_{k=0}^{K-1} |s_i(k)|^2 e^{2j\pi\frac{\Delta f_o}{Fs}k}\right) e^{j2\pi\Delta f_0 l_0/Fs}\,\mathbf{h_i} \qquad (23)$$

où $\mathbf{h_i}$ est le vecteur canal, de taille $N\mathrm{x}1$, associé à l'antenne d'émission $i$ (on a : $H = [\mathbf{h_1} \dots \mathbf{h_M}]$). Cette formule montre que, si le décalage en fréquence $\Delta f_O$ est trop important, l'intégration n'est plus effectuée de façon cohérente : l'algorithme de synchronisation MIMO doit donc tenir compte du décalage de fréquence pour le calcul des vecteurs d'intercorrélarion $\hat{r}_{xs_i}(l)$.

Dans la suite, on explique comment le décalage en fréquence est pris en compte dans le calcul de chaque vecteur d'intercorrélation $\hat{r}_{xsi}(l)$ intervenant dans le critère de synchronisation.

L'algorithme de synchronisation MIMO utilisé en présence d'un décalage de fréquence estime conjointement la position de synchronisation optimale $l_0$ et le décalage en fréquence $\Delta f_0$ associés à chaque trajet de propagation du signal utile, en remplaçant dans les équations le signal de référence $s_i(k)$ par le signal de référence décalé en fréquence pour le décalage testé $\Delta f$ : $s_i(k)e^{2j\pi\frac{\Delta f}{Fs}k}$. ou, ce qui est équivalent, en remplaçant le vecteur observation x(k) par un vecteur offsetté $\mathbf{x}(k)\exp(-j2\pi k\Delta f/Fs)$.

Le vecteur d'intercorrélation $\hat{r}_{xsi}$ peut ainsi s'écrire, pour chaque décalage en fréquence testé et pour chaque position de synchronisation testée :

$$\hat{r}_{xsi}(l, \Delta f) = \left(\frac{1}{K}\right) \sum_{k=0}^{K-1} x(l + F_{sur} * k) s_i^*(k) e^{-2j\pi\frac{\Delta f}{F_s}.k.F_{sur}} \qquad (24)$$

avec $\Delta f \in [-\Delta f_{max} ; +\Delta f_{max}]$ et $F_{sur}$ le facteur de sur-échantillonnage du signal d'entrée par rapport à la fréquence symbole.
La plage de fréquences à tester $[-\Delta f_{max} ; \Delta f_{max}]$ dépend de la précision des OL d'émission et de réception notée DELTA_OL_MAX, de la vitesse maximum des mobiles, notée VMAX, de la fréquence antenne, notée $F_{ant}$ :

$$\Delta f_{max} = 2 \left(DELTA\_OL\_MAX + \frac{VMAX}{c}\right) F_{ant} \qquad (25)$$

Afin de réduire la puissance de calcul, les vecteurs d'intercorrélation sont calculés au pas $\Delta f'$. Le pas $\Delta f'$ est déterminé de façon à ce que la variation de phase maximale sur la séquence d'apprentissage soit inférieure à une valeur notée DELTA_PHI_MAX :

$$\Delta f' = \frac{DELTA\_PHI\_MAX}{2.\pi.K} . F_s \qquad (26)$$

Le nombre de cases Doppler à tester dépend de $\Delta f_{max}$ et du pas $\Delta f'$, où ceil() est la fonction qui à un nombre réel donné associe le nombre entier immédiatement supérieur :

$$M_d = ceil(\frac{\Delta f_{max}}{\Delta f'}) \qquad (27)$$

L'algorithme calcule donc les vecteurs d'intercorrélation $\hat{r}_{xsi}(l,m)$ pour chaque position de synchronisation à tester $l$ et pour $m$ compris entre $- M_d$ et $+ M_d$ :

$$\hat{r}_{xsi}(l, m) = \left(\frac{1}{K}\right) \sum_{k=0}^{K-1} x(l + F_{sur} * k) s_i^*(k) e^{-2j\pi\frac{m.\Delta f'}{F_s}.k.F_{sur}} \qquad (28)$$

Afin de réduire la puissance de calcul, chaque séquence d'apprentissage de longueur $K$ est découpée en $T$ tranches de longueur $K_0$, avec $K = T . K_0$, sur lesquelles la rotation de phase induite par le décalage de fréquence soit inférieure à DELTA_PHI_MAX pour le décalage en fréquence maximal $\Delta f_{max}$ :

$$K_0 = ceil(\frac{DELTA\_PHI\_MAX}{2.\pi.\Delta f_{max}} . F_s) \qquad (29)$$

Pour chaque position de synchronisation testée $l$, un vecteur d'intercorrélation est estimé sur chaque tranche $t$ par la formule suivante :

$$\hat{r}_{xsi,t}(l) = \sum_{k=0}^{K_0-1} x\left(l + F_{sur} * (k + t.K_0)\right) s_i^*(k + t.K_0) \qquad (30)$$

Ces vecteurs élémentaires sont indépendants du décalage en fréquence.
A partir des corrélations élémentaires calculées lors de cette première étape, pour chaque position de synchronisation $l$, le vecteur d'intercorrélation $\hat{r}_{xsi}(l,m)$ est calculé pour les différentes cases Doppler m ($m = -M_d, ..., +M_d$), au pas $\Delta f'$.

$$\hat{r}_{xsi}(l,m) = (\tfrac{1}{K}) \sum_{t=0}^{T-1} \hat{r}_{xsi,t}(l) e^{-2j\pi \frac{m.\Delta f'}{F_s}.t.K_0} \qquad (31)$$

Les différents critères de synchronisation MIMO s'obtiennent alors, pour chaque position $l$ et pour chaque case Doppler $m$, par les différentes formules décrites dans le brevet, en remplaçant les vecteurs d'intercorrélation par les vecteurs d'intercorrélation de la formule ci-dessus et en calculant les matrices de corrélation par la formule suivante :

$$\hat{R}_{xx}(l) = (\tfrac{1}{K}) \sum_{k=0}^{K-1} x(l + Fsur * k)\; x^H(l + Fsur * k) \qquad (32)$$

Si le critère dépasse le seuil de synchronisation pour la position $l_0$ et la case Doppler $m_0$, un trajet est détecté sur la position $l_0$, avec un décalage en fréquence $m_0\Delta f'$.

Afin d'améliorer la résolution obtenue sur le décalage en fréquence, le décalage Doppler associé au trajet détecté sur cette position est estimé par interpolation parabolique à partir des critères calculés sur la position $l_0$ pour les trois cases Doppler ($m_0$-1), $m_0$ et ($m_0$+1) :

$$\widehat{\Delta f} = \left( m_0 + \frac{1}{2} \frac{c(l_0, m_0 + 1) - c(l_0, m_0 - 1)}{c(l_0, m_0 - 1) + c(l_0, m_0 + 1) - 2.c(l_0, m_0)} \right).\Delta f' \qquad (33)$$

En fonction du nombre de cases Doppler à tester, il est possible de réduire la puissance de calcul en utilisant des TFD, ou des TFR si $T$ est une puissance de 2, pour calculer les vecteurs d'intercorrélations sur chaque séquence d'apprentissage :

$$\hat{r}_{xsi}(l,m) = (\tfrac{1}{K}) \sum_{t=0}^{T-1} \hat{r}_{xsi,t}(l) e^{-2j\pi \frac{t.m}{T}} \qquad (34)$$

La résolution est alors égale à :

$$\Delta f_r = \frac{F_s}{T.K_0} = \frac{F_s}{K} \qquad (35)$$

Si la résolution est insuffisante, une amélioration d'un facteur $p$ peut être obtenue en effectuant $p$-1 opérations de TFD (ou de TFR suivant la valeur de $T$), sur les vecteurs $\hat{r}_{xsi,t}(l)$ décalés en fréquence de la façon suivante :

$$\hat{r}_{xsi,t}(l) e^{-2j\pi \frac{t}{T}.\frac{k}{p}}$$

pour $k$ = 1, ..., $p$-1, p est un facteur défini en fonction de l'amélioration souhaitée.

La trame sur laquelle est effectuée la synchronisation peut comporter plusieurs séquences TS, que le critère de synchronisation peut exploiter, ainsi qu'une ou plusieurs séquences de symboles d'information tel qu'il est représenté en figure 3.

On note :

- $N_{TS}$, le nombre de séquences d'apprentissage sur lesquelles est effectué le calcul du critère de synchronisation,
- $s_{i,j}(k)$, la séquence d'apprentissage d'indice $j$($j$=0, ... , $N_{TS}$ -1) émise sur l'antenne d'émission $i$,
- $p_j$, l'indice du premier symbole de la séquence d'apprentissage $j$, commun à toutes les antennes d'émission.

Afin d'améliorer les performances de détection, l'algorithme ci-avant peut se généraliser, en utilisant avantageusement les $N_{TS}$ séquences d'apprentissage disponibles sur la trame, de la façon suivante :
Le pas $\Delta f'$ dépend des positions des deux séquences TS extrêmes :

$$\Delta f' = \frac{\text{DELTA\_PHI\_MAX}}{2.\pi.\left(p_{N_{TS}-1} + (I-1)K_0 - p_0\right)}.F_s \qquad (36)$$

Pour chaque position de synchronisation testée *l*, un vecteur d'intercorrélation est estimé sur chaque tranche *t* de chaque séquence d'apprentissage *j* par la formule suivante :

$$\hat{r}_{xsi,t,j}(l) = \sum_{k=0}^{K_0-1} x\left(l + F_{sur} * \left(k + p_j + t.K_0\right)\right) s_{i,j}^*(k + t.K_0) \qquad (37)$$

A partir des corrélations élémentaires calculées lors de cette première étape sur les différentes tranches de chaque séquence d'apprentissage, pour chaque position de synchronisation *l*, le vecteur d'intercorrélation $\hat{r}_{xsi}(l,m)$ est calculé pour les différentes cases Doppler *m* ($m = -M_d, ..., +M_d$), au pas $\Delta f'$, par une intégration cohérente sur les $N_{TS}$ séquences d'apprentissage.

$$\hat{r}_{xsi}(l,m) = \left(\frac{1}{KN_{TS}}\right) \sum_{j=0}^{N_{TS}-1} \left(\sum_{t=0}^{T-1} \hat{r}_{xsi,t,j}(l) e^{-2j\pi \frac{m.\Delta f'}{F_s}.t.K_0}\right) e^{-2j\pi \frac{m.\Delta f'}{F_s}(p_j-p_0)} \qquad (38)$$

Les différents critères de synchronisation MIMO s'obtiennent alors pour chaque position *l* et pour chaque case Doppler *m* par les critères de synchronisation décrits ci-dessus, en remplaçant les vecteurs d'intercorrélation par les vecteurs d'intercorrélation de la formule ci-dessus et en calculant les matrices de corrélation sur les $N_{TS}$ séquences d'apprentissage par la formule suivante :

$$\hat{R}_{xx}(n) = \left(\frac{1}{KN_{TS}}\right) \sum_{j=0}^{N_{TS}-1} \left(\sum_{k=0}^{K-1} x\left(n + Fsur * \left(k + p_j\right)\right) x^H\left(n + Fsur * \left(k + p_j\right)\right)\right) \qquad (39)$$

Le procédé et le système selon l'invention permettent d'effectuer une synchronisation dans un contexte MIMO en présence d'interférences en réduisant les calculs par rapport à l'état de l'art, sans perdre en performances.

## Revendications

1. Procédé de synchronisation d'un signal dans un système de transmission comprenant M émetteurs et N récepteurs, les N récepteurs étant reliés à un processeur (2) adapté à traiter les signaux et à transmettre un résultat à un démodulateur, en présence d'interférences **caractérisé en ce qu'**il comporte au moins les étapes suivantes :
Au niveau du processeur (2)

   • Calculer (200) une matrice de corrélation $R_{ss}$ de signaux de référence émis par les M capteurs émetteurs, calculer son inverse $R_{ss}^{-1}$ (201),
   • Pour chaque indice *l* correspondant à un instant possible de synchronisation, avec *l* variant jusqu'à une position *l* + Etal, où Etal est l'étalement temporel maximal du canal, lorsque *l* correspond à la première position testée pour laquelle il y a dépassement du seuil réitérer les étapes suivantes :

      • Estimer (203) la matrice de corrélation de bruit $\hat{R}(l)$ reçu sur les N capteurs en réception,
      • Calculer (204) l'inverse de la matrice de corrélation estimée, $\hat{R}^{-1}(l)$,
      • Pour chaque indice $\Delta f$ correspondant à un offset de fréquence possible pour la synchronisation fréquentielle, entre $\Delta f_{min}$ et $\Delta f_{max}$,

         o Estimer une matrice d'intercorrélation (205) entre les signaux reçus sur les N capteurs en réception, offsettés de $-\Delta f$, et les séquences d'apprentissage transmises par les M antennes en émission, $\hat{R}_{XS}(l, \Delta f)$,
         o Calculer (206) un critère de synchronisation en déterminant la trace Tr[ ] d'une matrice résultant du produit formé par la matrice inverse de corrélation des séquences d'apprentissage $R_{ss}^{-1}$, la transposée conjuguée de l'estimée de la matrice d'intercorrélation des signaux reçus et de la matrice des séquences

d'apprentissage $\hat{R}_{XS}(l, \Delta f)^H$, l'inverse d'une estimée de la matrice de bruit $\hat{R}^{-1}(l)$ et l'estimée de la matrice d'intercorrélation entre les observations reçues et les séquences d'apprentissage $\hat{R}_{XS}(l, \Delta f)$ :

$$C(l, \Delta f) = EGLRT3(l, \Delta f) = Tr[R_{SS}^{-1} \hat{R}_{XS}(l, \Delta f)^H \hat{R}^{-1}(l) \hat{R}_{XS}(l, \Delta f)],$$

o Comparer (207) la valeur du critère $C(l, \Delta f)$ obtenu à une valeur seuil $\eta$, si la valeur du critère $C(l, \Delta f)$ dépasse la valeur seuil $\eta$ (208), alors considérer l'indice $l$ comme un candidat potentiel à l'instant temporel permettant la synchronisation et l'offset $\Delta f$ comme un candidat potentiel à l'offset de fréquence de synchronisation, réitérer le processus pour $\Delta f - \delta$ et $\Delta f + \delta$, où $\delta$ est le pas d'analyse en fréquence et réitérer le processus jusqu'à la position $l$ + Etal, où Etal est l'étalement temporel maximal du canal, déterminer une ou plusieurs valeurs d'instant possible $l$, et d'offset possible $\Delta f$ et déclencher le procédé de synchronisation et d'acquisition des signaux,
o Si la valeur du critère $C(l, \Delta f)$ est inférieure à la valeur seuil, incrémenter la valeur de $\Delta f$ jusqu'à une éventuelle nouvelle détection.

2. Procédé selon la revendication 1 **caractérisé en ce que** l'on estime la matrice de bruit en l'assimilant à l'inverse de la matrice de corrélation des signaux reçus $\hat{R}_{xx}(l)$ et le critère de calcul conjoint de l'indice et de l'offset de synchronisation est réalisé par la formule suivante : en déterminant la trace d'une matrice résultant du produit formé par la matrice inverse de corrélation des séquences d'apprentissage, la transposée conjuguée de l'estimée de la matrice d'intercorrélation des signaux reçus et de la matrice des séquences d'apprentissage, l'inverse d'une estimée de la matrice de bruit $\hat{R}^{-1}(l) = \hat{R}_{xx}^{-1}(l)$ et l'estimée de la matrice d'intercorrélation entre les observations reçues et les séquences d'apprentissage :

$$C(l, \Delta f) = E0\_GLRT3(l, \Delta f) = Tr[R_{SS}^{-1} \hat{R}_{XS}(l, \Delta f)^H \hat{R}_{XX}^{-1}(l) \hat{R}_{XS}(l, \Delta f)].$$

3. Procédé selon la revendication 2 **caractérisé en ce que** dans le cas où les M séquences de référence émises par les M capteurs émetteurs sont orthogonales, le calcul de l'indice de synchronisation est effectué en utilisant la formule suivante :

$$C(l, \Delta f) = E0\_GLRT3(l, \Delta f) \triangleq \sum_{i=1}^{M} \frac{\hat{r}_{XS_i}(l, \Delta f)^H \hat{R}_X(l)^{-1} \hat{r}_{XS_i}(l, \Delta f)}{r_{si}}$$

où le vecteur $\hat{r}_{XS_i}(l, \Delta f)$ est le vecteur d'intercorrélation entre les observations offsettées de $-\Delta f$ et la séquence d'apprentissage émise par un émetteur $i$ pour une position de synchronisation testée $l$, défini par :

$$\hat{r}_{XS_i}(l, \Delta f) \triangleq \frac{1}{K} \sum_{n=0}^{K-1} x((k+l)) \, s_i(k)^* \, \exp(-j2\pi\Delta f \, kT_e)$$

où $s_i(k)$ est la composante $i$ de $s(k)$ et $T_e$ la période d'échantillonnage des signaux reçus.

4. Procédé selon la revendication 1 **caractérisé en ce que** la matrice de bruit estimée, $\hat{R}_1(l, \Delta f)$, est estimée en retirant les contributions des séquences de synchronisation au niveau de l'estimée de la matrice de corrélation des signaux reçus, dans l'hypothèse où le signal contenant les séquences de référence est aligné dans le temps et en fréquence avec la matrice d'observation et le critère est obtenu par la formule suivante :

$$\hat{R}_1(l, \Delta f) = \hat{R}_{XX}(l) - \hat{R}_{XS}(l, \Delta f) \, R_{SS}^{-1} \, \hat{R}_{XS}(l, \Delta f)^H$$

$$C(l, \Delta f) = E1\_GLRT3(l, \Delta f) = Tr[R_{SS}^{-1} \hat{R}_{XS}(l, \Delta f)^H \hat{R}_1^{-1}(l, \Delta f) \hat{R}_{XS}(l, \Delta f)]$$

$R^{-1}_{ss}$ inverse de la matrice de corrélation des séquences de référence,

$\hat{R}_{xx}(l)$ l'estimée de la matrice de corrélation des signaux reçus pour une position $l$ possible de synchronisation,

$\hat{R}_{XS}(l, \Delta f)$ estimée de la matrice d'intercorrélation et sa transposée $\hat{R}_{XS}(l, \Delta f)^{\mathrm{H}}$.

**5.** Procédé selon la revendication 4 **caractérisé en ce que** lorsque les M séquences de référence sont des séquences orthogonales, le critère est obtenu par la formule suivante :

$$C(l, \Delta f) = E1\_GLRT3(l, \Delta f) \triangleq \sum_{i=1}^{M} \frac{\hat{r}_{XS_i}(l, \Delta f)^{H} \hat{R}_1^{-1}(l, \Delta f) \, \hat{r}_{XS_i}(l, \Delta f)}{r_{si}}$$

où le vecteur $\hat{r}_{XS_i}(l, \Delta f)$ est le vecteur d'intercorrélation entre les observations offsettées de $-\Delta f$ et la séquence de référence émise par un émetteur i pour une position de synchronisation testée $l$, défini par :

$$\hat{r}_{XS_i}(l, \Delta f) \triangleq \frac{1}{K} \sum_{n=0}^{K-1} x((k+l)) \, s_i(k)^{*} \exp(-j2\pi\Delta f \, kT_e)$$

où $s_i(k)$ est la composante i de $s(k)$ et $\hat{R}_1^{-1}(l, \Delta f)$ l'inverse de l'estimée de la matrice bruit, $T_e$ la période d'échantillonnage des signaux reçus.

**6.** Procédé selon l'une des revendications précédentes **caractérisé en ce que** l'on construit une matrice d'observation (Nx K') avec K' choisi et fixé afin que la matrice de canal H et la matrice de bruit soient stationnaires sur l'horizon temporel fixé par K' et on utilise la matrice estimée $\hat{R}'_{xx}(l) = \dfrac{X'(l)X'(l)^{H}}{K'}$ pour K'-K+1 positions testées avec X'(l) une matrice d'observation définie à partir des K' échantillons de signaux.

**7.** Procédé selon l'une des revendications précédentes **caractérisé en ce que** pour des applications où les bruits sont décorrélés sur les antennes mais de puissances différentes, le critère de synchronisation :

$$C(l) = E0 - Diag - GLRT3(l) = Tr\left[R_{ss}^{-1}\hat{R}_{xs}^{H}(l)\hat{R}_0'^{-1}(l)\hat{R}_{xs}(l)\right]$$

est obtenu pour une position réelle testée $l$,

en utilisant $\hat{R}_0'^{-1}(l) = \mathrm{Diag}(\hat{\eta}10(l), \hat{\eta}20(l), \ldots, \hat{\eta}N0(l))^{-1}$,

en insérant cette valeur dans $C(l) = GLRT3(l) = Tr\left[R_{ss}^{-1}\hat{R}_{xs}^{H}(l)R^{-1}\hat{R}_{xs}(l)\right]$ avec :

$\hat{R}_{xs}^{H}(l)$ la transposée conjuguée de l'estimée de la matrice d'intercorrélation des signaux reçus et des signaux de référence, pour un instant l possible pour la synchronisation,

$\hat{R}_{xs}(l)$ l'estimée de la matrice d'intercorrélation des signaux reçus et des signaux de référence pour un instant l possible de synchronisation,

$R^{-1}$ l'inverse de la matrice bruit.

**8.** Procédé selon l'une des revendications 1 à 6 **caractérisé en ce que** pour des applications de bruit blanc, le critère de synchronisation est obtenu par la formule suivante :

$$C(l)= E0 - BB - GLRT3(l) = \frac{Tr\left[R_{ss}^{-1}\hat{R}_{xs}^{H}(l)\hat{R}_{xs}(l)\right]}{Tr\left[\hat{R}_{xx}(l)\right]} = \frac{Tr\left[\hat{R}_{xs}(l)R_{ss}^{-1}\hat{R}_{xs}^{H}(l)\right]}{Tr\left[\hat{R}_{xx}(l)\right]}$$

Tr[] est la trace d'une matrice,

$R_{ss}^{-1}$ l'inverse de la matrice de corrélation des séquences de référence,

$\hat{R}_{XS}(l, \Delta f)$ l'estimée de la matrice d'intercorrélation et sa transposée $\hat{R}_{XS}(l, \Delta f)^{H}$,

$\hat{R}_{xx}(l)$ l'estimée de la matrice de corrélation des signaux reçus.

**9.** Procédé selon la revendication 8 **caractérisé en ce que** pour des applications où les M séquences de synchronisation sont décorrélées et orthogonales, on utilise la formule

$$GLRT1'(l, \Delta f) \;=\; \sum_{i\,=\,1}^{M} \frac{\hat{r}_{XS_i}(l, \Delta f)^{H}\,\hat{r}_{XS_i}(l, \Delta f)}{\hat{r}_{X}(l)\, r_{si}}$$

**10.** Procédé selon l'une des revendications précédentes **caractérisé en ce que** l'on estime conjointement la position de synchronisation *l* et le décalage en fréquence en utilisant le signal de référence décalé en fréquence associés à chaque trajet de propagation du signal pour estimer chaque vecteur d'intercorrélation $\hat{r}_{xsi}(l)$ entre le signal reçu et le signal de référence composante de la matrice d'intercorrélation $\hat{R}_{xs}(l)$.

**11.** Procédé selon la revendication 10 **caractérisé en ce que** l'on détermine un vecteur d'intercorrélation $\hat{r}_{xsi}(l)$ pour chaque décalage en fréquence et pour chaque position I à tester et pour m cases Doppler appartenant à un intervalle $[-M_d, +M_d]$ avec $M_d$ le nombre de cases Doppler à tester en utilisant la formule suivante :

$$\hat{r}_{xsi}(l,\Delta f) = (\tfrac{1}{K})\sum_{k=0}^{K-1} x(l + F_{sur} * k)s_i^*(k)e^{-2j\pi\frac{\Delta f}{F_s}.k.F_{sur}})$$

avec $\Delta f \in [-\Delta f_{max} ; +\Delta f_{max}]$, $F_{sur}$ le facteur de sur-échantillonnage du signal d'entrée par rapport à la fréquence symbole Fs, où $\Delta f_{max}$ est donnée en fonction de la vitesse maximum de déplacement des émetteurs et récepteurs.

**12.** Procédé selon la revendication 11 **caractérisé en ce que** l'on découpe la longueur K d'une séquence d'apprentissage en T tranches de longueur $K_0$ avec $K=T^* K_0$, T étant choisi afin que la rotation de phase induite par le décalage de fréquence est négligeable, on estime pour chaque position de synchronisation testée *I*, un vecteur d'intercorrélation sur chaque tranche t et pour chaque case Doppler m (m = -$M_d$, ..., +$M_d$), au pas $\Delta f'$.

$$\hat{r}_{xsi}(l,m) = (\tfrac{1}{K}) \sum_{t=0}^{T-1} \hat{r}_{xsi,t}(l)e^{-2j\pi\frac{m.\Delta f'}{F_s}.t.K_0}$$

et en déterminant la matrice de corrélation par la formule suivante :

$$\hat{R}_{xx}(l) = (\tfrac{1}{K}) \sum_{k=0}^{K-1} x(l + Fsur * k)\, x^{H}(l + Fsur * k)$$

$F_{sur}$ est la fréquence de suréchantillonnage, $F_s$ la fréquence symbole.

**13.** Procédé selon l'une des revendications 11 à 12 **caractérisé en ce que** on estime le décalage Doppler associé à un trajet détecté sur une position de synchronisation par interpolation parabolique à partir de critères calculés sur la position $l_0$ pour les trois cases Doppler ($m_0$-1), $m_0$ et ($m_0$+1) :

$$\widehat{\Delta f} = \left(m_0 + \frac{1}{2} \frac{c(l_0, m_0+1) - c(l_0, m_0-1)}{c(l_0, m_0-1) + c(l_0, m_0+1) - 2.c(l_0, m_0)}\right) . \Delta f'.$$

**14.** Procédé selon la revendication 13 **caractérisé en ce que** l'on utilise des transformées de Fourier ou des transformées de Fourier rapide pour calculer les intercorrélations effectuées sur chaque séquence d'apprentissage :

$$\hat{r}_{xsi}(l, m) = \left(\frac{1}{K}\right) \sum_{t=0}^{T-1} \hat{r}_{xsi,t}(l) e^{-2j\pi\frac{t.m}{T}}$$

**15.** Procédé selon l'une des revendications 10 à 14 **caractérisé en ce que** pour un signal contenant une trame de données comprenant des séquences de synchronisation TS, on utilise ces séquences TS et on exécute les étapes suivantes :

Le pas Δ*f'* dépend des positions des deux séquences TS extrêmes de la trame de données :

$$\Delta f' = \frac{\text{DELTA\_PHI\_MAX}}{2.\pi.\left(p_{N_{TS}-1} + (I-1)K_0 - p_0\right)} . F_s$$

Pour chaque position de synchronisation testée *I*, un vecteur d'intercorrélation est estimé sur chaque tranche *t* de chaque séquence d'apprentissage j par la formule suivante :

$$\hat{r}_{xsi,t,j}(l) = \sum_{k=0}^{K_0-1} x\left(l + F_{sur} * (k + p_j + t.K_0)\right) s_{i,j}^*(k + t.K_0)$$

$$\hat{r}_{xsi}(l, m) = \left(\frac{1}{KN_{TS}}\right) \sum_{j=0}^{N_{TS}-1} \left(\sum_{t=0}^{T-1} \hat{r}_{xsi,t,j}(l) e^{-2j\pi\frac{m.\Delta f'}{F_s}.t.K_0}\right) e^{-2j\pi\frac{m.\Delta f'}{F_s}(p_j - p_0)}$$

en calculant les matrices de corrélation sur les $N_{TS}$ séquences d'apprentissage par la formule suivante :

$$\widehat{R}_{xx}(n) = \left(\frac{1}{KN_{TS}}\right) \sum_{j=0}^{N_{TS}-1} \left(\sum_{k=0}^{K-1} x\left(n + Fsur * (k + p_j)\right) x^H\left(n + Fsur * (k + p_j)\right)\right)$$

- $N_{TS}$, le nombre de séquences d'apprentissage sur lesquelles est effectué le calcul du critère de synchronisation,
- $s_{i,j}(k)$, la séquence d'apprentissage d'indice *j* (*j*=0, … , $N_{TS}$ -1) émise sur l'antenne d'émission *i*,
- $p_j$, l'indice du premier symbole de la séquence d'apprentissage j, commun à toutes les antennes d'émission.

**Patentansprüche**

**1.** Verfahren zum Synchronisieren eines Signals in einem Übertragungssystem mit M Sendern und N Empfängern, wobei die N Empfänger mit einem Prozessor (2) verbunden sind, ausgelegt zum Verarbeiten der Signale und zum Übertragen eines Ergebnisses zu einem Demodulator, in Anwesenheit von Störungen, **dadurch gekennzeichnet, dass** es wenigstens die folgenden Schritte beinhaltet:

am Prozessor (2):

• Berechnen (200) einer Korrelationsmatrix $R_{ss}$ von von den M Sendesensoren gesendeten Referenzsignalen, Berechnen ihrer Umkehr $R_{ss}^{-1}$ (201),

• für jeden Index *I* entsprechend einer möglichen Synchronisationsinstanz, wobei *I* bis zu einer Position *I* + Eta1 variiert, wobei Eta1 die maximale Zeitspanne des Kanals ist, wenn *I* der ersten geprüften Position entspricht, für die der Schwellenwert überschritten wird, Wiederholen der folgenden Schritte:

• Schätzen (203) der Korrelationsmatrix von Rauschen R(l), empfangen auf den N Empfangssensoren,
• Berechnen (204) der Umkehr der geschätzten Korrelationsmatrix $\hat{R}^{-1}(l)$,
• für jeden Index $\Delta f$ entsprechend einem möglichen Frequenzversatz für die Frequenzsynchronisation, zwischen $\Delta f_{min}$ und $\Delta f_{max}$,

    o Schätzen einer Interkorrelationsmatrix (205) zwischen den auf den N Empfangssensoren empfangenen Signalen, versetzt um - $\Delta f$, und den von den M Sendeantennen übertragenen Lernsequenzen, $\hat{R}_{XS}(l,\Delta f)$,
    o Berechnen (206) eines Synchronisationskriteriums durch Bestimmen der Spur Tr[ ] einer Matrix, resultierend von dem Produkt, gebildet durch die Umkehrkorrelationsmatrix der Lernfolgen $R_{ss}^{-1}$, der konjugierten Transponierten der Schätzung der Interkorrelationsmatrix der empfangenen Signale und der Matrix der Lernfolgen $\hat{R}_{XS}(l,\Delta f)^{H}$, der Umkehr einer Schätzung der Rauschmatrix $\hat{R}^{-1}(l)$ und der Schätzung der Interkorrelationsmatrix zwischen den empfangenen Beobachtungen und den Lernfolgen $\hat{R}_{XS}(l,\Delta f)$:

$$C(l, \Delta f) = EGLRT3(l, \Delta f) = Tr[R_{SS}^{-1} \hat{R}_{XS}(l, \Delta f)^{H} \hat{R}^{-1}(l) \hat{R}_{XS}(l, \Delta f)],$$

    o Vergleichen (207) des Wertes des erhaltenen Kriteriums C($l$, $\Delta f$) mit einem Schwellenwert $\eta$, wenn der Wert des Kriteriums C($l$, $\Delta f$) den Schwellenwert $\eta$ (208) übersteigt, dann Betrachten des Indexes $l$ als potentiellen Kandidaten zu dem Zeitpunkt, der die Synchronisation und den Versatz $\Delta f$ zulässt, als potentiellen Kandidaten für den Synchronisationsfrequenzversatz, Wiederholen des Vorgangs für $\Delta f$ - $\delta$ und $\Delta f$ + $\delta$, wobei $\delta$ der Frequenzanalyseschritt ist, und Wiederholen des Vorgangs bis zur Position $l$ + Etal, wobei Etal die maximale zeitliche Streuung des Kanals ist, Bestimmen von einem oder mehreren möglichen Instanz- $l$ und Versatzwerten $\Delta f$ und Auslösen des Verfahrens zum Synchronisieren und Erfassen von Signalen,
    o Inkrementieren, wenn der Wert des Kriteriums C($l$, $\Delta f$) kleiner ist als der Schwellenwert, des Wertes von $\Delta f$ bis zu einer eventuellen neuen Detektion.

**2.** Verfahren nach Anspruch 1, **dadurch gekennzeichnet, dass** die Rauschmatrix durch Assimilieren der Umkehr der Korrelationsmatrix der empfangenen Signale $\hat{R}_{xx}(l)$ geschätzt wird und das gemeinsame Berechnungskritierum des Synchronisationsindexes und -versatzes mit der folgenden Formel realisiert wird: durch Bestimmen der Spur einer Matrix, die von dem Produkt resultiert, das durch die Umkehrkorrelationsmatrix von Lernsequenzen, die konjugierte Transponierte der Schätzung der Interkorrelationsmatrix der empfangenen Signale und der Matrix der Lernfolgen gebildet wird, die Umkehr einer Schätzung der Rauschmatrix $\hat{R}^{-1}(l) = \hat{R}_{xx}^{-1}(l)$ und der Schätzung der Interkorrelationsmatrix zwischen den empfangenen Beobachtungen und den Lernsequenzen:

$$C(l, \Delta f) = E0\_GLRT3(l, \Delta f) = Tr[R_{SS}^{-1} \hat{R}_{XS}(l, \Delta f)^{H} \hat{R}_{XX}^{-1}(l) \hat{R}_{XS}(l, \Delta f)].$$

**3.** Verfahren nach Anspruch 2, **dadurch gekennzeichnet, dass** in dem Fall, in dem die M von den M Sendesensoren gesendeten Referenzsequenzen orthogonal sind, die Berechnung des Synchronisationsindexes unter Anwendung der folgenden Formel erfolgt:

$$C(l, \Delta f) = E0\_GLRT3(l, \Delta f) \triangleq \sum_{i=1}^{M} \frac{\hat{r}_{XS_i}(l, \Delta f)^{H} \hat{R}_{X}(l)^{-1} \hat{r}_{XS_i}(l, \Delta f)}{r_{si}}$$

wobei der Vektor $\hat{r}_{XS_i}(l, \Delta f)$ der Interkorrelationsvektor zwischen den um - $\Delta f$ versetzten Beobachtungen und der von einem Sender i für eine getestete Synchronisationsposition $l$ gesendeten Lernfolge ist, definiert durch:

$$\hat{r}_{XS_i}(l, \Delta f) \triangleq \frac{1}{K} \sum_{n=0}^{K-1} x((k+l)) s_i(k)^{*} \exp(-j2\pi\Delta f k T_e)$$

wobei $s_i(k)$ die Komponente i von $s(k)$ ist und $T_e$ die Abtastperiode der empfangenen Signale ist.

4. Verfahren nach Anspruch 1, **dadurch gekennzeichnet, dass** die geschätzte Rauschmatrix $\hat{R}_1(l,\Delta f)$ durch Entfernen der Beiträge der Synchronisationsfolgen in der Schätzung der Korrelationsmatrix der empfangenen Signale geschätzt wird, unter der Annahme, dass das die Referenzfolgen enthaltende Signal zeitlich und frequenzmäßig mit der Beobachtungsmatrix ausgerichtet ist, und das Kriterium mit der folgenden Formel erhalten wird:

$$\hat{R}_1(l, \Delta f) = \hat{R}_{XX}(l) - \hat{R}_{XS}(l, \Delta f) \, R_{SS}^{-1} \, \hat{R}_{XS}(l, \Delta f)^H$$

$$C(l, \Delta f) = \text{E1\_GLRT3}(l, \Delta f) = \text{Tr}[R_{SS}^{-1} \, \hat{R}_{XS}(l, \Delta f)^H \, \hat{R}_1^{-1}(l, \Delta f) \, \hat{R}_{XS}(l, \Delta f)],$$

wobei

$R_{SS}^{-1}$ die Umkehr der Korrelationsmatrix der Referenzfolgen ist,

$\hat{R}_{xx}(l)$ die Schätzung der Korrelationsmatrix der empfangenen Signale für eine mögliche Synchronisationsposition ist,

$\hat{R}_{XS}(l,\Delta f)$ die Schätzung der Interkorrelationsmatrix und ihrer Transponierten $\hat{R}_{XS}(l,\Delta f)^H$ ist.

5. Verfahren nach Anspruch 4, **dadurch gekennzeichnet, dass**, wenn die M Referenzfolgen orthogonale Folgen sind, das Kriterium mit der folgenden Formel erhalten wird:

$$C(l, \Delta f) = \text{E1\_GLRT3}(l, \Delta f) \triangleq \sum_{i=1}^{M} \frac{\hat{r}_{XS_i}(l, \Delta f)^H \hat{R}_1^{-1}(l, \Delta f) \, \hat{r}_{XS_i}(l, \Delta f)}{r_{si}}$$

wobei der Vektor $\hat{r}_{XS_i}(l,\Delta f)$ der Interkorrelationsvektor zwischen den um $-\Delta f$ versetzten Beobachtungen und der von einem Sender i für eine getestete Synchronisationsposition $l$ gesendeten Referenzfolge ist, definiert durch:

$$\hat{r}_{XS_i}(l, \Delta f) \triangleq \frac{1}{K} \sum_{n=0}^{K-1} x((k+l)) \, s_i(k)^* \exp(-j2\pi\Delta f \, kT_e)$$

wobei $s_i(k)$ die Komponente i von $s(k)$ ist und $\hat{R}_1^{-1}(l, \Delta f)$ die Umkehr der Schätzung der Rauschmatrix ist, $T_e$ die Abtastperiode der empfangenen Signale ist.

6. Verfahren nach einem der vorherigen Ansprüche, **dadurch gekennzeichnet, dass** eine Beobachtungsmatrix (Nx K') konstruiert wird, wobei K' so gewählt und fixiert wird, dass die Kanalmatrix H und die Rauschmatrix auf dem zeitlichen Horizont stationär sind, fixiert durch K', und die geschätzte Matrix $\hat{R}'_{xx}(l) = \dfrac{X'(l)X'(l)^H}{K'}$ für K'-K+1 getestete Positionen benutzt wird, wobei X'(l) eine Beobachtungsmatrix ist, definiert auf der Basis von K' Signalabtastungen.

7. Verfahren nach einem der vorherigen Ansprüche, **dadurch gekennzeichnet, dass** für Anwendungen, in denen Rauschen auf den Antennen dekorreliert wird, aber mit unterschiedlichen Leistungen, das Synchronisationskriterium:

$$C(l) = E0 - Diag - GLRT3(l) = Tr\left[R_{ss}^{-1}\hat{R}_{xs}^{H}(l)\hat{R}_0^{'-1}(l)\hat{R}_{xs}(l)\right]$$

für eine getestete reale Position $l$ erhalten wird,

unter Benutzung von $\hat{R}_0^{'-1}(l) = \text{Diag}(\hat{\eta}_{10}(l), \hat{\eta}_{20}(l), \ldots, \hat{\eta}_{N0}(l))^{-1}$, durch Einsetzen dieses Wertes in

$$C(l) = GLRT3(l) = Tr\left[R_{ss}^{-1}\hat{R}_{xs}^{H}(l)R^{-1}\hat{R}_{xs}(l)\right],\text{ wobei:}$$

$\hat{R}_{xs}^{H}(l)$ die konjugierte Transponierte der Schätzung der Interkorrelationsmatrix der empfangenen Signale und der Referenzsignale für eine mögliche Instanz 1 für die Synchronisation ist,

$\hat{R}_{xs}(l)$ die Schätzung der Interkorrelationsmatrix der empfangenen Signale und der Referenzsignale für eine mögliche Synchronisationsinstanz 1 ist,

$R^{-1}$ die Umkehr der Rauschmatrix ist.

8. Verfahren nach einem der Ansprüche 1 bis 6, **dadurch gekennzeichnet, dass** für Weißrauschanwendungen das Synchronisationskriterium mit der folgenden Formel erhalten wird:

$$C(l) = E0 - BB - GLRT3(l) = \frac{Tr\left[R_{ss}^{-1}\hat{R}_{xs}^{H}(l)\hat{R}_{xs}(l)\right]}{Tr\left[\hat{R}_{xx}(l)\right]} = \frac{Tr\left[\hat{R}_{xs}(l)R_{ss}^{-1}\hat{R}_{xs}^{H}(l)\right]}{Tr\left[\hat{R}_{xx}(l)\right]},$$

wobei

Tr[] die Spur einer Matrix ist,

$R_{ss}^{-1}$ die Umkehr der Korrelationsmatrix der Referenzfolgen ist,

$\hat{R}_{XS}(l,\Delta f)$ die Schätzung der Interkorrelationsmatrix und ihrer Transponierten $\hat{R}_{XS}(l,\Delta f)^{H}$ ist,

$\hat{R}_{xx}(l)$ die Schätzung der Korrelationsmatrix der empfangenen Signale ist.

9. Verfahren nach Anspruch 8, **dadurch gekennzeichnet, dass** für Anwendungen, bei denen die M Synchronisationsfolgen dekorreliert und orthogonal sind, die folgende Formel benutzt wird:

$$GLRT1'(l, \Delta f) = \sum_{i=1}^{M} \frac{\hat{r}_{XSi}(l, \Delta f)^{H}\hat{r}_{XSi}(l, \Delta f)}{\hat{r}_{X}(l)\, r_{Si}}$$

10. Verfahren nach einem der vorherigen Ansprüche, **dadurch gekennzeichnet, dass** gemeinsam die Synchronisationsposition $l$ und der Frequenzversatz unter Nutzung des frequenzversetzten Referenzsignals geschätzt wird, assoziiert mit jeder Ausbreitungsbahn des Signals zum Schätzen jedes Interkorrelationsvektors $\hat{r}_{xsi}(l)$ zwischen dem empfangenen Signal und der Referenzsignalkomponente der Interkorrelationsmatrix $\hat{R}_{xs}(l)$.

11. Verfahren nach Anspruch 10, **dadurch gekennzeichnet, dass** ein Interkorrelationsvektor $\hat{r}_{xsi}(l)$ für jeden Frequenzversatz und für jede zu testende Position $l$ und für m Doppler-Fälle bestimmt wird, die zu einem Intervall $[-M_d, +M_d]$ gehören, wobei $M_d$ die Anzahl von zu testenden Doppler-Fällen unter Verwendung der folgenden Formel ist:

$$\hat{r}_{xsi}(l, \Delta f) = \left(\tfrac{1}{K}\right)\sum_{k=0}^{K-1} x(l + F_{sur}*k)s_i^{*}(k)e^{-2j\pi\frac{\Delta f}{F_s}k.F_{sur})}$$

wobei $\Delta f \in [-\Delta f_{max}\,;\,+\Delta f_{max}]$, $F_{sur}$ der Überabtastungsfaktor des Eingangssignals in Bezug auf die Symbolhäufigkeit Fs ist, wobei $\Delta f_{max}$ in Abhängigkeit von der maximalen Geschwindigkeit der Bewegung der Sender und Empfänger gegeben wird.

12. Verfahren nach Anspruch 11, **dadurch gekennzeichnet, dass** die Länge K einer Lernsequenz in T Längen-Slices $K_0$ geschnitten wird, wobei $K=T* K_0$, wobei T so gewählt wird, dass die durch den Frequenzversatz eingeführte Phasenrotation vernachlässigbar ist, für jede getestete Synchronisationsposition $l$ ein Interkorrelationsvektor auf jedem Slice $t$ geschätzt wird und für jeden Doppler-Fall $m(m = -M_d, ..., +M_d)$ im Takt $\Delta f$":

$$\hat{r}_{xsi}(l,m) = (\frac{1}{K}) \sum_{t=0}^{T-1} \hat{r}_{xsi,t}(l)e^{-2j\pi\frac{m.\Delta f\prime}{F_s}.t.K_0}$$

und unter Bestimmung der Korrelationsmatrix durch die folgende Formel:

$$\widehat{R}_{xx}(l) = (\frac{1}{K}) \sum_{k=0}^{K-1} x(l + Fsur * k) \, x^H(l + Fsur * k),$$

wobei $F_{sur}$ die Übertastungsfrequenz ist, $F_s$ die Symbolfrequenz ist.

13. Verfahren nach einem der Ansprüche 11 bis 12, **dadurch gekennzeichnet, dass** der Doppler-Versatz geschätzt wird, der mit einer Bahn assoziiert ist, die in einer Synchronisationsposition durch parabolische Interpolation auf der Basis der in der Position $l_0$ für die drei Dopplerfälle ($m_0$-1), $m_0$ und ($m_0$+1) berechneten Kriterien erkannt wird:

$$\widehat{\Delta f} = \left(m_0 + \frac{1}{2}\frac{c(l_0,m_0+1)-c(l_0,m_0-1)}{c(l_0,m_0-1)+c(l_0,m_0+1)-2.c(l_0,m_0)}\right).\Delta f\prime.$$

14. Verfahren nach Anspruch 13, **dadurch gekennzeichnet, dass** Fourier-Transformationen und schnelle Fourier-Transformationen zum Berechnen der auf jede Lernfolge bewirkten Interkorrelation benutzt werden:

$$\hat{r}_{xsi}(l,m) = (\frac{1}{K}) \sum_{t=0}^{T-1} \hat{r}_{xsi,t}(l)e^{-2j\pi\frac{t.m}{T}}.$$

15. Verfahren nach einem der Ansprüche 10 bis 14, **dadurch gekennzeichnet, dass** für jedes Signal, das einen Daten-Frame enthält, umfassend Synchronisationsfolgen TS, diese Folgen TS benutzt werden und die folgenden Schritte durchgeführt werden:
Schritt $\Delta f\prime\prime$ hängt von Positionen von zwei extremen Folgen TS des Daten-Frame ab:

$$\Delta f\prime = \frac{\text{DELTA\_PHI\_MAX}}{2.\pi.\left(p_{N_{TS}-1} + (I-1)K_0 - p_0\right)}.F_s$$

für jede getestete Synchronisationsposition $l$ wird ein Interkorrelationsvektor auf jedem Slice $t$ jeder Lernfolge $j$ durch die folgende Formel geschätzt:

$$\hat{r}_{xsi,t,j}(l) = \sum_{k=0}^{K_0-1} x\left(l + F_{sur} * (k + p_j + t.K_0)\right) s_{i,j}^*(k + t.K_0)$$

$$\hat{r}_{xsi}(l,m) = (\frac{1}{KN_{TS}}) \sum_{j=0}^{N_{TS}-1}\left(\sum_{t=0}^{T-1}\hat{r}_{xsi,t,j}(l)e^{-2j\pi\frac{m.\Delta f\prime}{F_s}.t.K_0}\right)e^{-2j\pi\frac{m.\Delta f\prime}{F_s}(p_j-p_0)}$$

durch Berechnen der Korrelationsmatrizen auf den $N_{TS}$ Lernfolgen durch die folgende Formel:

$$\widehat{R}_{xx}(n) = (\frac{1}{KN_{TS}}) \sum_{j=0}^{N_{TS}-1}\left(\sum_{k=0}^{K-1} x\left(n + Fsur * (k + p_j)\right) x^H\left(n + Fsur * (k + p_j)\right)\right),$$

wobei

- $N_{TS}$ die Anzahl von Lernfolgen ist, auf denen die Berechnung des Synchronisationskriteriums erfolgt,
- $s_{i,j}(k)$ die Lernfolge mit Index $j$ ($j$=0, ..., $N_{TS}$ -1) ist, gesendet auf der Sendeantenne i,
- $p_j$ der Index des ersten Symbols der Lernfolge $j$ ist, der allen Sendeantennen gemeinsam ist.

**Claims**

1. A method for synchronizing a signal in a transmission system comprising M transmitters and N receivers, the N receivers being linked to a processor (2) adapted for processing the signals and for transmitting a result to a demodulator, in the presence of interferences, **characterized in that** it comprises at least the following steps: at the level of the processor (2)

   • calculating (200) a correlation matrix $R_{ss}$ of reference signals transmitted by the M transmitting sensors, calculating its inverse $R_{ss}^{-1}$ (201),
   • for each index $l$ corresponding to a possible instant of synchronization, with $l$ varying up to a position $l$ + Etal, where Etal is the maximum temporal spread of the channel, when $l$ corresponds to the first position tested for which there is an overshoot of the threshold, reiterating the following steps:
   • estimating (203) the correlation matrix of noise $\hat{R}(l)$ received on the N sensors in reception,
   • calculating (204) the inverse of the estimated correlation matrix, $\hat{R}^{-1}(l)$,
   • for each index $\Delta f$ corresponding to a possible frequency offset for the frequency synchronization, between $\Delta f_{min}$ and $\Delta f_{max}$,

      - estimating an intercorrelation matrix (205) between the signals received on the N sensors in reception, offset by $\Delta f$, and the learning sequences transmitted by the M antennas in transmission, $\hat{R}_{XS}(l, \Delta f)$,
      - calculating (206) a synchronization criterion by determining the trace Tr[ ] of a matrix resulting from the product formed by the inverse correlation matrix of the learning sequences $R_{ss}^{-1}$, the conjugate transpose of the estimate of the intercorrelation matrix of the signals received and of the matrix of the learning sequences $\hat{R}_{XS}(l, \Delta f)^H$, the inverse of an estimate of the noise matrix $\hat{R}^{-1}(l)$ and the estimate of the intercorrelation matrix between the observations received and the learning sequences $\hat{R}_{XS}(l, \Delta f)$ :

$$ C(l, \Delta f) = \text{EGLRT3}(l, \Delta f) = \text{Tr}[R_{SS}^{-1}\, \hat{R}_{xs}(l, \Delta f)^H\, \hat{R}^{-1}(l)\, \hat{R}_{xs}(l, \Delta f)], $$

      - comparing (207) the value of the criterion $C(l, \Delta f)$ obtained to a threshold value $\eta$, if the value of the criterion $C(l, \Delta f)$ exceeds the threshold value $\eta$ (208), then considering the index $l$ as a potential candidate for the temporal instant allowing the synchronization and the offset $\Delta f$ as a potential candidate for the synchronization frequency offset, reiterating the process for $\Delta f - \delta$ and $\Delta f + \delta$, where $\delta$ is the frequency analysis pitch and reiterating the process up to the position $l$ + Etal, where Etal is the maximum temporal spread of the channel, determining one or more values of possible instant 1, and of possible offset $\Delta f$ and triggering the signal synchronization and acquisition method,
      - if the value of the criterion $C(l, \Delta f)$ is less than the threshold value, incrementing the value of $\Delta f$ until an eventual new detection.

2. The method as claimed in claim 1, **characterized in that** the noise matrix is estimated by assimilating it to the inverse of the correlation matrix of the signals received $\hat{R}_{xx}(l)$ and the criterion of joint calculation of the index and of the synchronization offset is produced by the following formula: by determining the trace of a matrix resulting from the product formed by the inverse correlation matrix of the learning sequences, the conjugate transpose of the estimate of the intercorrelation matrix of the signals received and of the matrix of the learning sequences, the inverse of an estimate of the noise matrix $\hat{R}^{-1}(l) = \hat{R}_{xx}^{-1}(l)$ and the estimate of the intercorrelation matrix between the observations received and the learning sequences:

$$ C(l, \Delta f) = \text{E0\_GLRT3}(l, \Delta f) = \text{Tr}[R_{SS}^{-1}\, \hat{R}_{xs}(l, \Delta f)^H\, \hat{R}_{xx}^{-1}(l)\, \hat{R}_{xs}(l, \Delta f)]. $$

3. The method as claimed in claim 2, **characterized in that**, in the case where the M reference sequences transmitted by the M transmitting sensors are orthogonal, the calculation of the synchronization index is performed by using the following formula:

$$C(l, \Delta f) = E0\_GLRT3(l, \Delta f) \triangleq \sum_{i=1}^{M} \frac{\hat{r}_{XS_i}(l, \Delta f)^H \hat{R}_X(l)^{-1} \hat{r}_{XS_i}(l, \Delta f)}{r_{Si}}$$

where the vector $\hat{r}_{XS_i}(l, \Delta f)$ is the intercorrelation vector between the observations offset by $-\Delta f$ and the learning sequence transmitted by a transmitter i for a tested synchronization position 1, defined by:

$$\hat{r}_{XS_i}(l, \Delta f) \triangleq \frac{1}{K} \sum_{n=0}^{K-1} x((k+l)) \, s_i(k)^* \exp(-j2\pi\Delta f \, kT_e)$$

where $s_i(k)$ is the component i of $s(k)$ and $T_e$ is the sampling period of the signals received.

4. The method as claimed in claim 1, **characterized in that** the estimated noise matrix, $\hat{R}_1(l, \Delta f)$, is estimated by subtracting the contributions of the synchronization sequences in the estimate of the correlation matrix of the signals received, assuming that the signal containing the reference sequences is aligned in time and in frequency with the observation matrix and the criterion is obtained by the following formula:

$$\hat{R}_1(l, \Delta f) = \hat{R}_{XX}(l) - \hat{R}_{XS}(l, \Delta f) \, R_{SS}^{-1} \, \hat{R}_{XS}(l, \Delta f)^H$$

$$C(l, \Delta f) = E1\_GLRT3(l, \Delta f) = Tr[R_{SS}^{-1} \, \hat{R}_{XS}(l, \Delta f)^H \, \hat{R}_1^{-1}(l, \Delta f) \, \hat{R}_{XS}(l, \Delta f)]$$

$R_{ss}^{-1}$ inverse of the correlation matrix of the reference sequences,
$\hat{R}_{xx}(l)$ the estimate of the intercorrelation matrix of the signals received, for a possible synchronization position $l$,
$\hat{R}_{XS}(l, \Delta f)$ estimate of the intercorrelation matrix and its transpose $\hat{R}_{XS}(l, \Delta f)^H$.

5. The method as claimed in claim 4, **characterized in that**, when the M reference sequences are orthogonal sequences, the criterion is obtained by the following formula:

$$C(l, \Delta f) = E1\_GLRT3(l, \Delta f) \triangleq \sum_{i=1}^{M} \frac{\hat{r}_{XS_i}(l, \Delta f)^H \hat{R}_1^{-1}(l, \Delta f) \, \hat{r}_{XS_i}(l, \Delta f)}{r_{Si}}$$

where the vector $\hat{r}_{XS_i}(l, \Delta f)$ is the intercorrelation vector between the observations offset by $-\Delta f$ and the reference sequence transmitted by a transmitter i for a tested synchronization position 1, defined by:

$$\hat{r}_{XS_i}(l, \Delta f) \triangleq \frac{1}{K} \sum_{n=0}^{K-1} x((k+l)) \, s_i(k)^* \exp(-j2\pi\Delta f \, kT_e)$$

where $s_i(k)$ is the component i of $s(k)$ and $\hat{R}_1^{-1}(l, \Delta f)$ the inverse of the estimate of the noise matrix, $T_e$ is the sampling period of the received signals.

6. The method as claimed in one of the preceding claims, **characterized in that** an observation matrix ($N \times K'$) is constructed with K' chosen and set in order for the channel matrix H and the noise matrix to be stationary on the temporal horizon set by K' and the estimated matrix

$$\hat{R}'_{xx}(l) = \frac{X'(l)X'(l)^H}{K'}$$

is used for K'-K+1 tested positions with X'(l) an observation matrix defined from the K' signal samples.

7. The method as claimed in one of the preceding claims, **characterized in that**, for applications where the noises are decorrelated on the antennas but of different powers, the criterion of synchronization:

$$C(l) = E0 - Diag - GLRT3(l) = Tr\left[R_{ss}^{-1}\hat{R}_{xs}^{H}(l)\hat{R}_0^{'-1}(l)\hat{R}_{xs}(l)\right]$$

is obtained for a real position tested l,

using $\hat{R}_0^{'-1}(l) = Diag(\hat{\eta}10(l), \hat{\eta}20(l), , , , , \hat{\eta}N0(l))^{-1}$,

by inserting this value in $C(l) = GLRT3(l) = Tr\left[R_{ss}^{-1}\hat{R}_{xs}^{H}(l)R^{-1}\hat{R}_{xs}(l)\right]$ with:

$\hat{R}_{xs}^{H}(l)$ the conjugate transpose of the estimated intercorrelation matrix of the received signals and reference signals, for an instant l possible for synchronization,
$\hat{R}_{xs}(l)$ the estimate of the intercorrelation matrix of the received signals and reference signals for a possible synchronization instant l,
$R^{-1}$ the inverse of the noise matrix.

8. The method as claimed in one of claims 1 to 6, **characterized in that** for white noise applications, the synchronization criterion is obtained by the following formula:

$$C(l) = E0 - BB - GLRT3(l) = \frac{Tr\left[R_{ss}^{-1}\hat{R}_{xs}^{H}(l)\hat{R}_{xs}(l)\right]}{Tr\left[\hat{R}_{xx}(l)\right]} = \frac{Tr\left[\hat{R}_{xs}(l)R_{ss}^{-1}\hat{R}_{xs}^{H}(l)\right]}{Tr\left[\hat{R}_{xx}(l)\right]}$$

Tr[] is the trace of a matrix,
$R_{ss}^{-1}$ the inverse of the correlation matrix of the reference sequences,
$\hat{R}_{XS}(l,\Delta f)$ the estimate of the intercorrelation matrix and its transpose $\hat{R}_{XS}(l,\Delta f)^H$,
$\hat{R}_{xx}(l)$ the estimate of the correlation matrix of the signals received.

9. The method as claimed in claim 8, **characterized in that**, for applications where the M synchronization sequences are decorrelated and orthogonal, the following formula is used

$$GLRT1'(l, \Delta f) = \sum_{i=1}^{M} \frac{\hat{r}_{XSi}(l, \Delta f)^H \hat{r}_{XSi}(l, \Delta f)}{\hat{r}_X(l)\, r_{Si}}$$

10. The method as claimed in one of the preceding claims, **characterized in that** the synchronization position l and the frequency offset are estimated jointly by using the reference signal offset in frequency associated with each propagation path of the signal to estimate each intercorrelation vector $\hat{r}_{xsi}(l)$ between the signal received and the component reference signal of the intercorrelation matrix $\hat{R}_{xs}(l)$.

11. The method as claimed in claim 10, **characterized in that** an intercorrelation vector $\hat{r}_{xsi}(l)$ is determined for each frequency offset and for each position 1 to be tested and for m Doppler cells belonging to an interval $[-M_d, +M_d]$ with $M_d$ the number of Doppler cells to be tested by using the following formula:

$$\hat{r}_{xsi}(l, \Delta f) = (\tfrac{1}{K}) \sum_{k=0}^{K-1} x(l + F_{sur} * k) s_i^*(k) e^{-2j\pi \frac{\Delta f}{F_s}.k.F_{sur}})$$

with $\Delta f \in [-\Delta f_{max}; +\Delta f_{max}]$, $F_{sur}$ the upsampling factor of the input signal relative to the symbol frequency Fs, where $\Delta f_{max}$ is given as a function of the maximum speed of movement of the transmitters and receivers.

12. The method as claimed in claim 11, **characterized in that** the length K of a learning sequence is subdivided into T slices of length $K_0$ with $K = T^* K_0$, T being chosen in order for the phase rotation induced by the frequency offset to be negligible, there is estimated, for each tested synchronization position $l$, an intercorrelation vector on each slice $t$ and for each Doppler cell $m$ ($m = -M_d$, ..., $+M_d$), with the pitch $\Delta f'$.

$$\hat{r}_{xsi}(l, m) = (\tfrac{1}{K}) \sum_{t=0}^{T-1} \hat{r}_{xsi,t}(l) e^{-2j\pi \frac{m.\Delta f'}{F_s}.t.K_0}$$

and by determining the correlation matrix by the following formula:

$$\hat{R}_{xx}(l) = (\tfrac{1}{K}) \sum_{k=0}^{K-1} x(l + Fsur * k)\, x^H(l + Fsur * k)$$

$F_{sur}$ is the upsampling frequency, $F_s$ the symbol frequency.

13. The method as claimed in one of claims 11 or 12, **characterized in that** the Doppler offset associated with a path detected on a synchronization position is estimated by parabolic interpolation from criteria calculated on the position $l_0$ for the three Doppler cells ($m_0$-1), $m_0$ and ($m_0$+1):

$$\widehat{\Delta f} = \left(m_0 + \frac{1}{2} \frac{c(l_0, m_0+1) - c(l_0, m_0-1)}{c(l_0, m_0-1) + c(l_0, m_0+1) - 2.c(l_0, m_0)}\right) . \Delta f'.$$

14. The method as claimed in claim 13, **characterized in that** Fourier transforms or fast Fourier transforms are used to calculate the intercorrelations performed on each learning sequence:

$$\hat{r}_{xsi}(l, m) = (\tfrac{1}{K}) \sum_{t=0}^{T-1} \hat{r}_{xsi,t}(l) e^{-2j\pi \frac{t.m}{T}}$$

15. The method as claimed in one of claims 10 to 14, **characterized in that**, for a signal containing a data frame comprising synchronization sequences TS, these sequences TS are used and the following steps are executed: the pitch $\Delta f'$ depends on the positions of the two extreme sequences TS of the data frame:

$$\Delta f' = \frac{\text{DELTA\_PHI\_MAX}}{2.\pi. \left(p_{N_{TS}-1} + (I - 1)K_0 - p_0\right)} . F_s$$

for each tested synchronization position $l$, an intercorrelation vector is estimated on each slice $t$ of each learning sequence $j$ by the following formula:

$$\hat{r}_{xsi,t,j}(l) = \sum_{k=0}^{K_0-1} x\left(l + F_{sur} * \left(k + p_j + t.K_0\right)\right) s_{i,j}^*(k + t.K_0)$$

$$\hat{r}_{xsi}(l,m) = \left(\frac{1}{KN_{TS}}\right) \sum_{j=0}^{N_{TS}-1} \left(\sum_{t=0}^{T-1} \hat{r}_{xsi,t,j}(l) e^{-2j\pi\frac{m.\Delta f\prime}{F_s}.t.K_0}\right) e^{-2j\pi\frac{m.\Delta f\prime}{F_s}(p_j-p_0)}$$

by calculating the correlation matrices on the $N_{TS}$ learning sequences by the following formula:

$$\hat{R}_{xx}(n) = \left(\frac{1}{KN_{TS}}\right)\sum_{j=0}^{N_{TS}-1}\left(\sum_{k=0}^{K-1} x\left(n + Fsur * \left(k + p_j\right)\right) x^H\left(n + Fsur * \left(k + p_j\right)\right)\right)$$

- $N_{TS}$, the number of learning sequences on which the calculation of the synchronization criterion is performed,
- $s_{i,j}(k)$, the learning sequence of index $j$ ($j$=0, $N_{TS}$-1) transmitted on the transmission antenna $i$,
- $p_j$, the index of the first symbol of the learning sequence $j$, common to all the transmission antennas.

$\underline{1}$

$C_1$

$C_2$

$C_3$

.

.

$C_M$

$R_1$

$R_2$

.

$R_i$

.

$R_N$

$\underline{2}$

$\underline{3}$

Signal
démodulé

# FIG.1

$R_{ss}, R_{ss}^{-1}$ — 200, 201

$I_{initiale}=1$ — 202

$\hat{R}(I)$ — 203

$\hat{R}^{-1}(I)$ — 204

$\hat{R}_{xs}(I, \Delta f)$ — 205

— 210

$I > I\_{initiale} + Etal$
et $\Delta f < \Delta f_{max}$

non

oui

$I=I+1$ et
$\Delta f +\partial f$

209

$C(I.\Delta f) = EGLRT3(I,\Delta f) = Tr\left[ R_{ss}^{-1} \hat{R}_{xs}^{H}(I.\Delta f)\ \hat{R}^{-1}(I)\ \hat{R}_{xs}(I.\Delta f) \right]$ — 206

— 207

non    $C(I, \Delta f) > \eta$    oui

— 208

Détection de
position de
synchronisation

Pas de détection

211

fin

## FIG.2

| Données$_0$ | TS$_0$ | Données$_1$ | TS$_1$ | Données$_2$ | Données$_3$ | ⋯ | Données$_N$ | TS$_{N_{TS-1}}$ |

$p_0$          $p_1$                                    $p_{N_{TS-1}}$

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0665665 A

**Littérature non-brevet citée dans la description**

- **D.M. DUGLOS ; R.A. SCHOLTZ.** Acquisition of spread spectrum signais by an adaptive array. *IEEE Trans. Acou. Speech.Signal Proc.,* 1989, vol. 37 (8), 1253-1270
- **L.E. BRENNAN ; I.S. REED.** An adaptive array signal processing algorithm for communications. *IEEE Trans. Aerosp. Electronic Systems,* 1982, vol. 18 (1), 124-130
- **D. W. BLISS ; P. A. PARKER.** Temporal synchronization of MIMO wireless communication in the presence of interference. *IEEE Trans. Signal Process.,* Mars 2010, vol. 58 (3), 1794-1806
- **HILTUNEN S et al.** New insights into time synchronization of MIMO systems with interference. *2015 23RD EUROPEAN SIGNAL PROCESSING CONFERENCE (EUSIPCO), EURASIP,* 31 Août 2015, 1381-1385